# EUROPEAN PATENT SPECIFICATION

(11) **EP 4 357 111 B1**
(45) Date of publication and mention of the grant of the patent: **09.09.2026**
(21) Application number: 22824988.4
(22) Date of filing: 14.06.2022
(51) Int. Cl.: B29C 65/08, B29C 65/16, B29C 65/48, B29C 65/56, B29C 65/70, B29C 65/82, H01Q 1/42, H01Q 17/00, H05K 9/00, B32B 7/025, G01S 7/02, B29C 65/14, B29C 65/06, B29L 31/30

(54) **STRUCTURE, STRUCTURE MANUFACTURING METHOD, AND MILLIMETER WAVE RADAR MODULE**
STRUKTUR, STRUKTURHERSTELLUNGSVERFAHREN UND MILLIMETERWELLENRADARMODUL
STRUCTURE, PROCÉDÉ DE FABRICATION DE STRUCTURE ET MODULE RADAR À ONDES MILLIMÉTRIQUES

(30) Priority: 17.06.2021 JP 2021100835; 29.10.2021 JP 2021178182
(43) Date of publication of application: 24.04.2024
(73) Proprietor: Mitsubishi Chemical Corporation, Chiyoda-ku Tokyo 100-8251 (JP)
(72) Inventor: ISEKI Shuta, Hiratsuka-shi, Kanagawa 254-0016 (JP); SHOJI Hidekazu, Hiratsuka-shi, Kanagawa 254-0016 (JP)
(74) Representative: Hoffmann Eitle
(86) International application number: PCT/JP2022/023746
(87) International publication number: WO 2022/265000

(56) References cited:
- EP-A1- 3 392 306
- EP-A1- 3 705 270
- WO-A1-2019/088073
- JP-A- 2005 178 282
- JP-A- 2005 193 614
- JP-A- 2008 075 077
- JP-A- 2020 038 879
- JP-U- 3 231 596
- US-A1- 2004 227 663
- US-A1- 2012 105 300
- US-A1- 2021 147 622

## Description

### [Technical Field]

The present invention relates to a structure, a production method of the structure, and a millimeter wave radar module. In particular, the present invention relates to a structure in which a first member and a second member are joined.

### [Background Art]

Thermoplastic resins such as polybutylene terephthalate resins are excellent in mechanical strength, chemical resistance, electrical insulation, etc., and also have excellent heat resistance, moldability, and recyclability, being therefore widely used for various equipment parts.

Recently, there has been an increase in the number of cases where welding is performed to improve productivity, and laser welding, which has low impact on electronic components, has been used more frequently. For example, in Patent Literature 1, a laser-welded product made of two polybutylene terephthalate resin moldings (members) is disclosed.

Patent Literature 2 describes a resin component disposed in a path of a beam emitted from a radar equipment, the resin component consisting of a thermoplastic resin composition containing at least one thermoplastic resin selected from a group consisting of a rubbery polymer-reinforced vinyl-based resin wherein a polymer part derived from a rubbery polymer and a vinyl-based resin part containing a structural unit derived from a vinyl-based monomer are chemically bonded, a polyolefin resin, and a polycarbonate resin, and having a dielectric constant of 2.9 or less, and a mold shrinkage rate of 1.2% or less as measured in accordance with JIS K 7152-4.

Patent Literature 3 describes a laser welded body having a structure in which a member I and a member II are integrally bonded to each other, the member I contains 0.0005 to 5.0 parts by mass, with respect to 100 parts by mass of a polyester-based resin A, of a laser transmissive/absorptive coloring material capable of transmitting and absorbing laser beam, and the polyester-based resin A contains at least a polybutylene terephthalate copolymer resin, the member II contains 0.15 to 10.00 parts by mass, with respect to 100 parts by mass of a polyester-based resin B, of a laser absorptive coloring material not transmitting but capable of absorbing laser beam, and the polyester-based resin B contains (B1) a homo PBT, (B2) a homo PBT-based mixed resin containing a homo PBT, or (B3) a copolymerized PBT-based mixed resin containing a copolymerized PBT.

Patent Literature 4 describes a millimeter-wave radar comprising: an antenna base having a transmission/reception antenna; a housing fixing the antenna base; and at least a radome or a radar cover enclosing the antenna base; wherein the radome or the radar cover is provided with a radio wave absorbing layer.

Patent Literature 5 describes a cover for a millimeter-wave radar, the cover being provided on an antenna that transmits and/or receives a millimeter wave of 75 to 81 GHz, the cover containing a thermoplastic resin composition that contains an aromatic polycarbonate resin having a diphenyl structural unit, the cover having a relative dielectric constant εᵣ of 3.0 or less, a dielectric loss tangent tan δ of 8.0×10⁻³ or less, and a loss factor εᵣ·tan δ of 17.0×10⁻³ or less.

Patent Literature 6 describes a radome for covering an antenna substrate of a millimeter-band radar apparatus, with a partition wall formed integrally in the radome separating the internal space of the radome into a first internal space, located in correspondence with a transmitting antenna section, and a second internal space, located in correspondence with a receiving antenna section. Increased isolation between transmission and reception is achieved thereby, by reducing the amount of transmitted radar waves which directly reach the receiving antenna section.

### [Citation List]

### [Patent Literature]

[Patent Literature 1] WO 2017/146196
[Patent Literature 2] EP 3 392 306 A1
[Patent Literature 3] EP 3 705 270 A1
[Patent Literature 4] US 2004/227663 A1
[Patent Literature 5] US 2021/147622 A1
[Patent Literature 6] US 2012/105300 A1

### [Summary of Invention]

### [Technical Problem]

Here, a structure such as a laser-welded product in which two resin members are joined is also expected to be applied to a millimeter-wave radar. A millimeter wave radar emits radio waves in the millimeter wave band with a wavelength of 1 to 10 mm at a frequency of 30 to 300 GHz, particularly 60 to 90 GHz, and receives the reflected waves returning from a target after collision, so that the presence of an obstacle, the distance to a target, or the relative speed to a target can be detected. Recently, malfunctions of a millimeter wave radar are caused by not only the transmitted electromagnetic waves but also the reflected electromagnetic waves. Therefore, there is an increasing demand for structures with high electromagnetic wave absorptance with low transmittance and low reflectance.

An object of the present invention is to solve such a problem. In other words, an object of the present invention is to provide a structure in which two resin members are joined, with at least one of the resin members being a resin member having a high electromagnetic wave absorptance, a production method of the structure, and a millimeter wave radar module.

### [Solution to Problem]

The present inventors conducted research to address the above-mentioned problems, and as a result, discovered that the above problems could be solved by joining the resin members that has a high electromagnetic wave transmittance and the resin members that has a low electromagnetic wave transmittance. Specifically, the problems described above are solved by the following means.
<1> A structure comprising a first member formed from a thermopla stic resin composition A and a second member formed from a thermo plastic resin composition B,
   the first member and the second member being joined at least partially,
   wherein the thermoplastic resin composition A molded into a molding with a thickness of 2 mm has a transmittance of 70.0% or more determined according to Formula (C) at a frequency of 76.5 GHz; the thermoplastic resin composition B molded into a molding with a thickness of 2 mm has a transmittance of less than 50.0% determined according to Formula (C) at a frequency of 76.5 GHz; and the thermoplastic resin composition B molded into a molding with a thickness of 2 mm has an absorptance of 40.0% or more determined according to Formula (A) at a frequency of 76.5 GHz: $Transmittance \left(%\right) = \frac{1}{{10}^{- T / 10}} \times 100$
   wherein T represents the transmission loss measured by a free space method; $Absorptance \left(%\right) = 100 - \left(\frac{1}{{10}^{- R / 10}}\times 100+\frac{1}{{10}^{- T / 10}}\times 100\right)$
   wherein R represents the reflection loss measured by a free space method, and T represents the transmission loss measured by a free space method;
   wherein transmittance and absorptance are measured as described later in the description; and
   characterized in that the difference between the absorptance of a test piece of the thermoplastic resin composition A molded to a thickness of 2 mm determined according to Formula (A) at a frequency of 76.5 GHz and the absorptance of a test piece of the thermoplastic resin composition B molded to a thickness of 2 mm determined according to Formula (A) at a frequency of 76.5 GHz is 40.0% or more.
<2> The structure according to <1>, wherein the thermoplastic resin composition B comprises an electrically conductive carbon compound.
<3> The structure according to <2>, wherein the electrically conductive carbon compound comprises a carbon nanotube.
<4> The structure according to any one of <1> to <3>, wherein the thermoplastic resin composition B comprises a reinforcing material.
<5> The structure according to any one of <1> to <4>, wherein the thermoplastic resin composition B comprises a polybutylene terephthalate resin.
<6> The structure according to any one of <1> to <5>, wherein the thermoplastic resin composition A comprises a polybutylene terephthalate resin.
<7> The structure according to any one of <1> to <6>, wherein the first member and the second member are joined by any one of laser welding, vibration welding, ultrasonic welding, two-color molding, insert molding, screwing, adhesion with an adhesive, and fitting.
<8> The structure according to any one of <1> to <6>, wherein the first member and the second member are joined by laser welding, with the first member being on the laser transmission side during laser welding.
<9> The structure according to any one of <1> to <8>, further comprising an electromagnetic wave controller.
<10> The structure according to any one of <1> to <9>, having a housing with a hollow structure surrounded by at least the first member and the second member, with the housing enclosing the element.
<11> The structure according to <10>, wherein the element emits and/or detects electromagnetic waves, and at least one of the electromagnetic waves be transmitted through the first member, and at least one of the electromagnetic waves be absorbed by the second member.
<12> The structure according to <11>, wherein the first member or the second member are present in any direction opposite to the transmitting direction and/or sensing direction of the electromagnetic waves.
<13> A production method of a structure comprising joining a first member formed from thermoplastic resin composition A and a second member formed from thermoplastic resin composition B at least partially, wherein the thermoplastic resin composition A molded into a molding with a thickness of 2 mm has a transmittance of 70.0% or more determined according to Formula (C) at a frequency of 76.5 GHz;
   the thermoplastic resin composition B molded into a molding with a thickness of 2 mm has a transmittance of less than 50.0% determined according to Formula (C) at a frequency of 76.5 GHz; and the thermoplastic resin composition B molded into a molding with a thickness of 2 mm has an absorptance of40.0% or more determined according to Formula (A) at a frequency of 76.5 GHz: $Transmittance \left(%\right) = \frac{1}{{10}^{- T / 10}} \times 100$
   wherein T represents the transmission loss measured by a free space method; $Absorptance \left(%\right) = 100 - \left(\frac{1}{{10}^{- R / 10}}\times 100+\frac{1}{{10}^{- T / 10}}\times 100\right)$
   wherein R represents the reflection loss measured by a free space method, and T represents the transmission loss measured by a free space method;
   wherein transmittance and absorptance are measured as described later in the description; and
   characterized in that the difference between the absorptance of a test piece of the thermoplastic resin composition A molded to a thickness of 2 mm determined according to Formula (A) at a frequency of 76.5 GHz and the absorptance of a test piece of the thermoplastic resin composition B molded to a thickness of 2 mm determined according to Formula (A) at a frequency of 76.5 GHz is 40.0% or more.
<14> A millimeter wave radar module comprising the structure according to any one of <1> to <12>.

### [Advantageous Effects of Invention]

The present invention enables to provide a structure in which two resin members are joined, with at least one of the resin members being a resin member having a high electromagnetic wave absorptance, a production method of the structure, and a millimeter wave radar module to be provided.

### [Brief Description of Drawings]

[Figure 1] Figure 1 is a schematic view showing a structure in a present embodiment.
[Figure 2] Figure 2 is a variational schematic view showing a structure in a present embodiment.
[Figure 3] Figure 3 is a variational schematic view showing a structure in a present embodiment.
[Figure 4] Figure 4 is a variational schematic view showing a structure in a present embodiment.
[Figure 5] Figure 5 is a variational schematic view showing a structure in a present embodiment.
[Figure 6] Figure 6 is a schematic view showing a structure for measurement of laser welding strength in Example.
[Figure 7] Figure 7 is a schematic view showing a structure for measurement of laser welding strength in Example.
[Figure 8] Figure 8 is a schematic view showing a structure for measurement of laser welding strength in Example.
[Figure 9] Figure 9 is a schematic view showing a measurement method of laser welding strength in Example.
[Figure 10] Figure 10 is a schematic view showing a dumbbell-shaped test piece prepared in Example 11.

### [Description of Embodiment]

Hereinafter, the embodiment of the present invention (hereinafter, referred to simply as "present embodiment") is described in detail. The present embodiment described below is an example for describing the present invention, and subject to the appended claims, the present invention is not limited only to the present embodiment.

In the present specification, the term "to" is used to include that the prefix and postfix numerical values thereof as the lower limit and the upper limit.

In the present specification, various physical properties and characteristic values are ones at 23°C, unless otherwise specified.

In the present specification, the weight average molecular weight and the number average molecular weight are in terms of polystyrene, as measured by GPC (gel permeation chromatography).

In the case where a standard shown in the present specification has a different measurement method or the like depending on the year, the standards as of January 1, 2021 is used unless otherwise specified.

In the present specification, the unit of reflection loss and transmission loss is "dB" (decibel).

The molding of the present embodiment has a first member formed from a thermoplastic resin composition A and a second member formed from a thermoplastic resin composition B, with the first member and second member being at least partially joined. A test piece formed from the thermoplastic resin composition A to a thickness of 2 mm has a transmittance of 70.0% or more determined according to Formula (C) at a frequency of 76.5 GHz, a test piece formed from the thermoplastic resin composition B to a thickness of 2 mm has a transmittance of less than 50.0% determined according to Formula (C) at a frequency of 76.5 GHz, and a test piece formed from the thermoplastic resin composition B to a thickness of 2 mm has a absorptance of 40.0% or more determined according to Formula (A) at a frequency of 76.5 GHz. Such a configuration allows a structure in which at least one of the resin members has a high electromagnetic wave absorptance to be obtained. Further, a structure in which at least one of the resin members has a high electromagnetic wave transmittance can be obtained. In other words, the structure of the present embodiment can include an electromagnetic wave controller. Such an electromagnetic wave controller is composed of, for example, a first member and a second member, and may further include a third member. Also, such an electromagnetic wave controller may include, for example, a plurality of members in addition to the third member. $Transmittance \left(%\right) = \frac{1}{{10}^{- T / 10}} \times 100$ wherein T represents the transmission loss measured by a free space method. $Absorptance \left(%\right) = 100 - \left(\frac{1}{{10}^{- R / 10}}\times 100+\frac{1}{{10}^{- T / 10}}\times 100\right)$ wherein R represents the reflection loss measured by a free space method, and T represents the transmission loss measured by a free space method.

In the present specification, unless otherwise described, transmittance refers to the transmittance of a test piece formed to a thickness of 2 mm (preferably 100 mm × 100 mm × 2 mm thick) determined according to Formula (C) at a frequency of 76.5 GHz.

In the present specification, unless otherwise described, absorptance refers to the absorptance of a test piece formed to a thickness of 2 mm (preferably 100 mm × 100 mm × 2 mm thick) determined according to Formula (A) at a frequency of 76.5 GHz.

In the present specification, unless otherwise described, reflectance refers to the reflectance of a test piece formed to a thickness of 2 mm (preferably 100 mm × 100 mm × 2 mm thick) determined according to Formula (B) at a frequency of 76.5 GHz. $Reflectance \left(%\right) = \frac{1}{{10}^{- R / 10}} \times 100$ wherein R represents the reflection loss measured by a free space method.

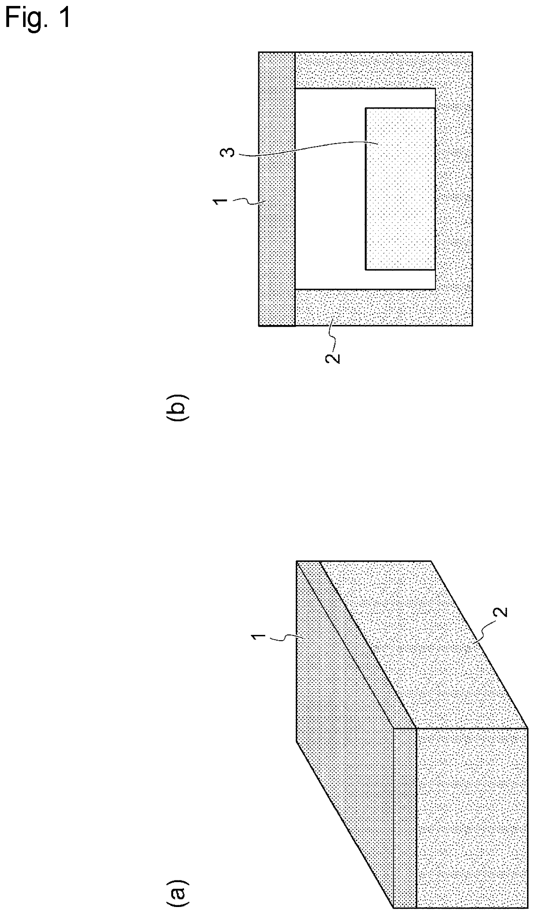

Figure 1 is an example of a schematic diagram of the structure of the present embodiment, where (a) shows the structure as seen from the outside and (b) shows a cross-sectional view. In an aspect shown in Figure 1, 1 is the first member formed from a thermoplastic resin composition A, and 2 is the second member formed from a thermoplastic resin composition B. In the present embodiment, the transmittance of the test piece formed from the thermoplastic resin composition A to a thickness of 2 mm is 70.0% or more, the transmittance of the test piece formed from the thermoplastic resin composition B to a thickness of 2 mm is less than 50.0%, and the absorptance of a test piece formed from the thermoplastic resin composition B to a thickness of 2 mm is 40.0% or more. With such a configuration, electromagnetic wave noise is suppressed by the second member 2 formed from the thermoplastic resin composition B. It is preferable that the structure of the present embodiment be a molding having a hollow structure, and in the hollow structure, an element 3 (for example, an element susceptible to electromagnetic wave noise such as a millimeter wave radar detection unit or an element which easily generates electromagnetic wave noise) be housed.

Specifically, it is preferable that as illustrated in Figure 1, the structure of the present embodiment have, for example, a housing with a hollow structure surrounded by at least the first member 1 and the second member 2, with the housing enclosing the element 3. Alternatively, the housing in a first embodiment may be a housing surrounded by a first member, a second member, and a third member other than the first member and the second member. Here, the first member functions as an electromagnetic wave transmitting member that transmits electromagnetic waves, and the second member functions as an electromagnetic wave absorbing member that absorbs electromagnetic waves.

It is also preferable that in the structure, the enclosed element be an element that emits and/or detects electromagnetic waves, and at least one of the electromagnetic waves be transmitted through the first member, and at least one of the electromagnetic waves be absorbed by the second member. With such a configuration, in an element that emits and/or detects electromagnetic waves, the first member and the second member are present so as to oppose to the surface from which the electromagnetic waves are transmitted. Accordingly, the irradiation direction of the electromagnetic waves of laser can be controlled.

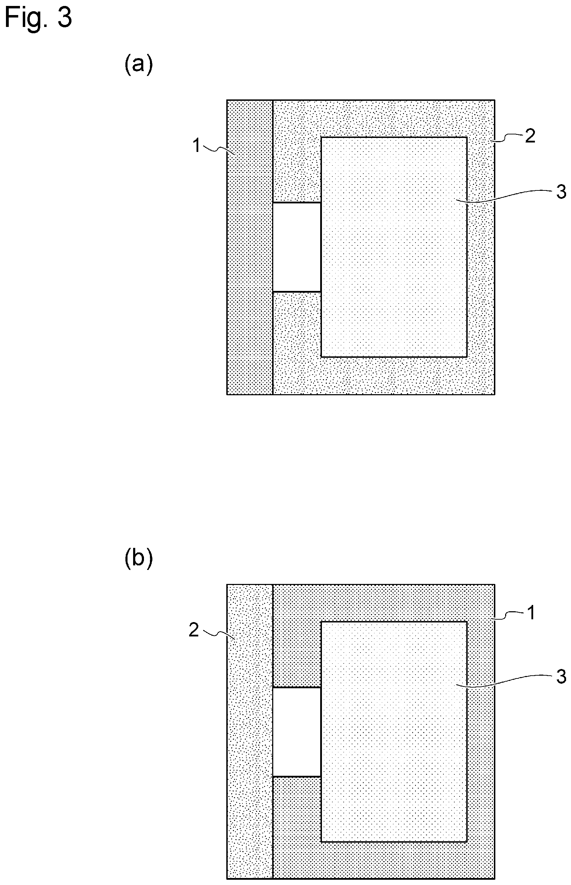

Further, it is preferable that the first member and/or the second member be present in any direction opposite to direction and/or sensing direction of the electromagnetic waves. With such a configuration, electromagnetic waves can be transmitted only in some directions, and in other directions, reflection of the electromagnetic waves that causes noise or malfunction can be suppressed or the electromagnetic waves can be absorbed. As an aspect in which the first member and the second member are present in any direction opposite to direction and/or sensing direction of electromagnetic waves, the aspect as shown in Figure 3 described later is included as example.

Specific examples of the enclosed element include an element including an electronic substrate for emitting electromagnetic waves of a millimeter wave radar. A structure having a surface opposed to an electromagnetic wave transmitting member (first member) that transmits electromagnetic waves emitted from the element and a surface opposed to an electromagnetic wave absorbing member (second member) that absorbs electromagnetic waves emitted from the element allows the irradiation direction of the electromagnetic waves of the laser to be precisely controlled.

The electromagnetic wave transmitting member (first member) in the present embodiment does not mean that 100% of electromagnetic waves are transmitted, which may be a member formed from the thermoplastic resin composition A, with a test piece thereof with a thickness of 2 mm having a transmittance of 70.0% or more determined according to Formula (C) at a frequency of 76.5 GHz. The electromagnetic wave absorbing member (second member) in the present embodiment does not mean that it absorbs 100% of electromagnetic waves, which may be any member formed from the thermoplastic resin composition B. That is, the member may be formed from a resin composition, with a test piece thereof with a thickness of 2 mm having a transmittance of less than 50.0% determined according to Formula (C) at a frequency of 76.5 GHz, and an absorptance of 40.0% or more determined according to Formula (A) at a frequency of 76.5 GHz.

The structure of the present embodiment is preferably used for radar applications. Specifically, the structure is used for millimeter-wave radar housings, covers, millimeter-wave radar parts, and the like. In particular, in the present embodiment, a millimeter wave radar module having the structure of the present embodiment is preferably used.

Examples of the millimeter-wave radar modules include in-vehicle millimeter wave radar for use in an automatic brake control device, inter-vehicle distance control device, steering device for reducing pedestrian accidents, control device for preventing erroneous transmission, acceleration suppression device in case of pedal error, approaching vehicle warning device, lane keeping support device, warning device for preventing rear-end collision, parking support device, and obstacle around vehicle warning device; millimeter wave radar for railroad and aviation for use in platform monitoring/obstacle in railway crossing detection device, content transmission device on a train, tram/train collision prevention device, and device for detecting obstacle on a runway; millimeter wave radar for use in traffic infrastructure such as intersection monitoring device and elevator monitoring device; millimeter wave radar for various security equipment; millimeter wave radar for medical and nursing care such as systems for monitoring children or aged persons; and millimeter wave radar for transmitting various data contents.

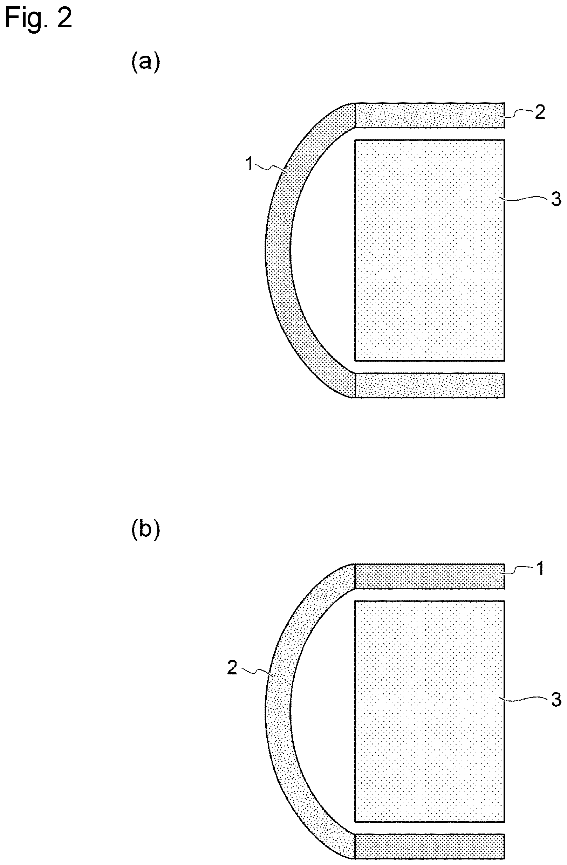

Figure 2 is a variational schematic view showing a structure of the present embodiment with the same reference symbols as in Figure 1, showing a sectional view in the same manner as in Figure 1 (b).

In the structure shown in Figure 2 (a), a first member 1 has a curved surface. In other words, in the structure of the present embodiment, the first member 1 is not necessarily required to be flat, and the shape thereof may be freely determined. In the structure shown in Figure 2 (a), although the thickness of the first member 1 is the same at any part when viewed from the cross section, the thickness of the first member 1 may be varied depending on the location.

In the structure shown in Figure 2 (a), although there exists a space between the first member 1 and the element 3, other members may exist in the space.

In addition, in the structure shown in Figure 2 (a), a part of the element 3 is not covered with either the first member 1 or the second member 2. That is, the necessity of providing the first member 1 and the second member 2 may be low in the direction where the electromagnetic wave absorption or transmission control is not required in the element 3. In that case, it may further have a third member (not shown in drawing) so as to cover the element 3.

Alternatively, as shown in Figure 2 (b), the structure may have a second member 2 with a curved surface.

Figure 3 is a variational schematic view showing a structure in the present embodiment with the same reference symbols as in Figure 1, showing a sectional view in the same manner as in Figure 1 (b).

In the structure shown in Figure 3 (a) and (b), each of the elements 3 is wholly covered with the first member 1 and the second member 2. In other words, the first member 1 and the second member 2 form a housing of the element 3.

In the structure shown in Figure 3 (a), the second member 2 surrounds the element 3 so as to be in contact with the most part thereof. With such a configuration, the absorption and transmission of electromagnetic waves can be controlled more effectively. Further, since the second member 2 and the most part of the element 3 are in contact with each other, noise due to reflection of electromagnetic waves emitted from the element 3 can be reduced.

Alternatively, as in the structure shown in Figure 3 (b), the first member 1 may surround the element 3 so as to be in contact with the most part thereof.

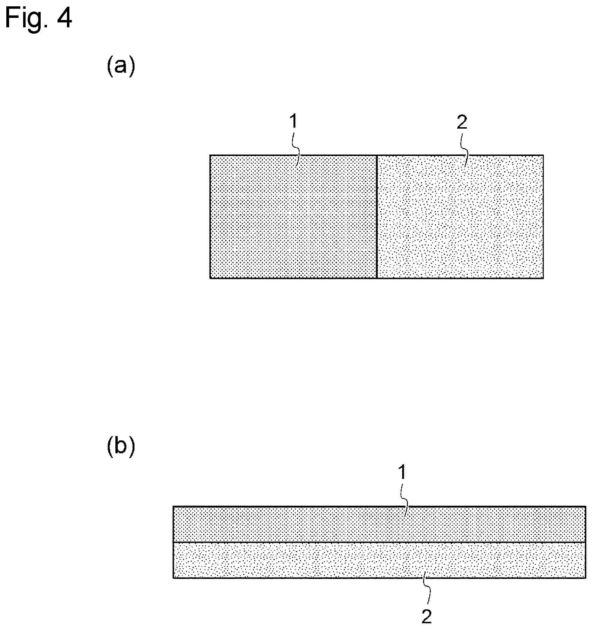

A variational schematic view of the structure in the present embodiment is shown in Figure 4, showing a front view of the structure. The reference symbols are the same as in Figure 1, though Figure 4 is a plan view.

In the structures shown in Figure 4 (a) and (b), the flat plate-like first member 1 and the flat plate-like second member 2 are in contact with each other. In the structure shown in Figure 4 (a), the portion where the first member 1 and the second member 2 are in contact is relatively short, while in the structure shown in Figure 4 (b), the portion where the first member 1 and the second member 2 are in contact is relatively long. Since the structures shown in Figures 4 (a) and (b) are in a flat plate shape, not having a hollow structure for housing an element or the like.

Each of the structures shown in Figure 4 (a) and (b) is used as a sheet to be provided when electromagnetic waves are required to transmit partially through a flat plate shape. Further, although the flat plate shape is shown in Figures 4 (a) and (b), the shape may be appropriately determined according to the application. For example, the shape may have a curved surface or a wave surface instead of a flat plate shape. Furthermore, the thickness is not required to be constant.

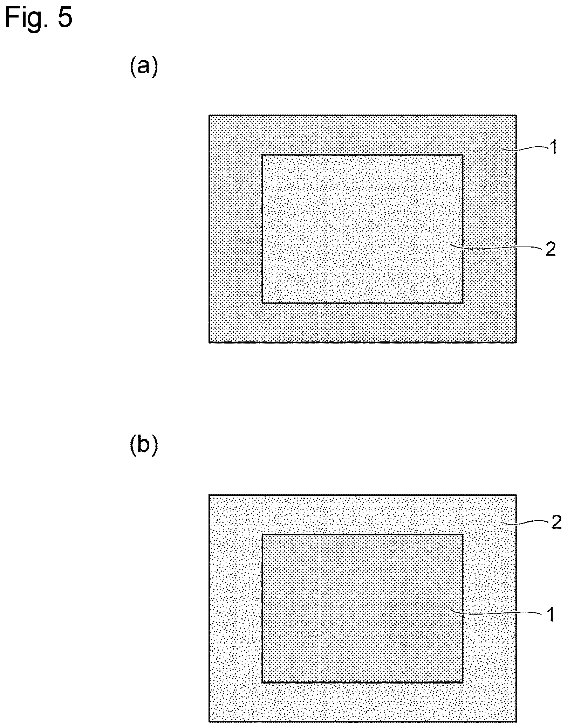

A variational schematic view of the structure in the present embodiment is shown in Figure 5, showing a front view of the structure. Reference symbols are the same as in Figure 1. The structure shown in Figure 5 is also a structure having no hollow structure as with the structure shown in Figure 4, and used as a sheet to be provided when electromagnetic waves are required to partially transmit through a flat plate form.

The structure shown in Figure 5 (a) is a structure including a second member provided in a first member. In this manner, by providing an electromagnetic wave transmitting member (first member) and an electromagnetic wave absorbing member (second member), electromagnetic waves can be transmitted through at a desired portion and absorbed at another desired portion. In the structure shown in Figure 5 (a), the second member is provided in the first member. Alternatively, as shown in Figure 5 (b), the first member 1 may be provided in the second member 2. Also, a plurality of second members 2 may be provided in the first member 1. Further, the shapes of the first member 1 and the second member 2 may also be appropriately determined according to the application.

### <Thermoplastic resin composition A>

The thermoplastic resin composition A is a resin composition containing a thermoplastic resin, with a test piece formed therefrom to a thickness of 2 mm having a transmittance of 70.0% or more determined according to Formula (C) at a frequency of 76.5 GHz. Use of the thermoplastic resin composition A having such a high transmittance allows small attenuation of the emitted radar and improved radar sensitivity to be achieved.

The transmittance is 70.0% or more, and may be 80.0% or more. The upper limit thereof is 100.0% or less, practically 99.0% or less. The increase in the transmittance allows the laser welding strength to be increased when laser welding is performed with the electromagnetic wave strength used for radar detection.

In the present embodiment, it is preferable that the absorptance of a test piece formed from the thermoplastic resin composition A to a thickness of 2 mm at a frequency of 76.5 GHz determined according to formula (A) be 50.0% or less. The absorptance is 40.0% or less, preferably 30.0% or less, more preferably 20.0% or less, still more preferably 15.0% or less, even more preferably 10.0% or less, and furthermore preferably 8.0% or less. Although the lower limit is ideally 0%, the required performance is sufficiently satisfied even with a lower limit of 0.5% or more.

Further, in the present embodiment, it is preferable that the reflectance of a test piece formed from the thermoplastic resin composition A to a thickness of 2 mm determined according to Formula (B) at a frequency of 76.5 GHz be 50.0% or less. The reflectance is 40.0% or less, preferably 30.0% or less, more preferably 20.0% or less, still more preferably 15.0% or less, even more preferably 10.0% or less, and furthermore preferably 5.0% or less. Although the lower limit is ideally 0%, the required performance is sufficiently satisfied even with a lower limit of 0.3% or more.

The absorptance, transmittance, and reflectance can be achieved by, for example, not blending an electrically conductive carbon compound such as carbon black and carbon nanotube with the thermoplastic resin composition A, or by remarkably reducing the amount blended.

Subsequently, the components contained in the thermoplastic resin composition A is described as follows. The thermoplastic resin composition A is not particularly specified as long as it contains a thermoplastic resin and satisfies a predetermined transmittance. The thermoplastic resin composition A may include a thermoplastic resin only, or may include a stabilizer, a release agent, a reinforcing material, and other components in addition to the thermoplastic resin. Further, the thermoplastic resin composition A may contain a colorant. The colorant may be a light-transmitting colorant or a light-absorbing colorant.

### <<Thermoplastic resin>>

Preferred examples of the thermoplastic resins used in the present embodiment include polyester resins (thermoplastic polyester resins); polyamide resins; polycarbonate resins; polystyrene-based resins; polyolefin resins such as polyethylene resins, polypropylene resins and cyclic cycloolefin resins; polyacetal resins; polyimide resins; polyetherimide resin; polyurethane resin; polyphenylene ether resins; polyphenylene sulfide resins; polysulfone resins; and polymethacrylate resins. It is more preferable that the thermoplastic resin be selected from polyester resins, polycarbonate resins and polyamide resins. It is still more preferable that the thermoplastic resin include a polyester resin, and even more preferable that the thermoplastic resin include a polybutylene terephthalate resin.

The details of these resins are the same as those described in the latter described thermoplastic resin composition B, and the preferred ranges are also the same.

The content of the thermoplastic resin in the thermoplastic resin composition A in the present embodiment is preferably 30 mass% or more, more preferably 35 mass% or more, still more preferably 40 mass% or more, even more preferably 45 mass% or more, and furthermore preferably 50 mass% or more. With a content equal to or more than the lower limit, the fluidity during injection molding tends to be more improved. Further, the content of the thermoplastic resin in the thermoplastic resin composition A may be 100 mass%, 96 mass% or less, 93 mass% or less, or 90 mass% or less. In the case where a reinforcing material is further included, the content of the thermoplastic resin is preferably 85 mass% or less, more preferably 80 mass% or less, still more preferably 75 mass% or less, and even more preferably 70 mass% or less. With a content equal to or less than the upper limit, the mechanical strength of the resulting structure tends to be more improved.

The thermoplastic resin composition A in the present embodiment may contain only one thermoplastic resin, or may contain two or more thermoplastic resins. In the case where two or more types are contained, it is preferable that the total amount be within the range.

### <<Light-transmitting colorant>>

The light-transmitting colorant has a high light transmittance in the wavelength range of irradiated laser light, for example, in the wavelength range of 800 nm to 100 nm.

The light-transmitting colorant is not particularly limited as long as it transmits a certain percentage or more of laser for laser welding, and a known colorant may be used.

The thermoplastic resin composition A may or may not contain a light-transmitting colorant. By containing a light-transmitting colorant, the designability of the resulting structure can be improved.

The light-transmitting colorant includes, for example, a polybutylene terephthalate resin (e.g., Novaduran (registered trademark) 5008), 30 mass% of glass fiber (e.g., trade name: T-127, manufactured by Nippon Electric Glass Co., Ltd.), and 0.2 mass% of a colorant (considered to be a light-transmitting colorant), which are blended to 100 mass% in total so as to have a measured light transmittance of 70% or more.

The light-transmitting colorant can be appropriately selected according to the use, and the color is not particularly specified. The light-transmitting colorant used in the present embodiment is preferably a black colorant and/or a black colorant composition. The black colorant composition means a colorant composition that exhibits black with a combination of two or more chromatic colorants such as red, blue and green.

A first embodiment of the black colorant composition includes a green colorant and a red colorant. A second embodiment of the black colorant composition includes a red colorant, a blue colorant and a yellow colorant.

The light-transmitting colorant is usually a dye.

Specific examples of the light-transmitting colorant include naphthalocyanine, aniline black, phthalocyanine, porphyrin, perinone, quaterrylene, azo, azomethine, anthraquinone, pyrazolone, a squaric acid derivative, perylene, a chromium complex, and immonium. Among them, azomethine, anthraquinone, and perinone are preferred, and anthraquinone and perinone are more preferred.

Examples of the commercially available products include Plast Yellow 8000, Plast Red M 8315, Plast Red 8370 and Oil Green 5602, which are colorants manufactured by Arimoto Chemical Co., Ltd., Macrolex Yellow 3G, Macrolex Red EG, and Macrolex Green 5B, which are colorants manufactured by LANXESS, and KP Plast HK, KP Plast Red HG, KP Plast Red H2G, KP Plast Blue R, KP Plast Blue GR and KP Plastic Green G, which are manufactured by KIWA Chemical Industry Co., Ltd.

In addition, colorants described in Japanese Patent No. 4157300 and colorants described in Japanese Patent No. 4040460 can also be employed.

In the case where the thermoplastic resin composition A contains a light-transmitting colorant, the content thereof is preferably 0.001 to 5 parts by mass relative to 100 parts by mass of the thermoplastic resin. The lower limit of the content is preferably 0.01 parts by mass or more, more preferably 0.05 parts by mass or more, still more preferably 0.1 parts by mass or more, and even more preferably 0.2 parts by mass or more. With a content equal to or more than the lower limit, the resulting first member is colored with enhanced designability. The upper limit of the content is preferably 3 parts by mass or less, more preferably 2 parts by mass or less, still more preferably 1 part by mass or less, even more preferably 0.8 parts by mass or less. and furthermore preferably 0.5 parts by mass or less. With a content equal to or less than the upper limit, the light-transmitting colorant is effectively prevented from bleeding out.

The thermoplastic resin composition A may contain only one type of light-transmitting colorant, or may contain two or more types. In the case where two or more types are contained, it is preferable that the total amount be within the range.

### <<Light absorbing colorant>>

The light-absorbing colorant has the maximum absorption wavelength in the wavelength range of the irradiated laser light, for example, in the wavelength range of 800 nm to 1100 nm.

The thermoplastic resin composition A may or may not contain a light-absorbing colorant. The light-absorbing colorant contained allows the designability of the resulting structure to be improved.

The light-absorbing colorant is a colorant including, for example, a polybutylene terephthalate resin (e.g., Novaduran (registered trademark) 5008), 30 mass% of glass fiber (e.g., trade name: T-127, manufactured by Nippon Electric Glass Co., Ltd.) and 0.3 parts by mass of a colorant (considered to be a light-absorbing colorant), which are blended so as to have a light transmittance of less than 20%, or 10% or less, measured by the method described in the following Examples (measurement of light transmittance on the opposite side of gate).

The light-absorbing colorant is usually a pigment.

Examples of the light-absorbing colorant include a black colorant such as carbon black, a white colorant such as titanium oxide and zinc sulfide, and a chromatic coloring pigment such as SUMITONE CARMINE series manufactured by Sumika Color Co., Ltd., and PV FAST series manufactured by CLARIANT. Among them, at least one or two or more in combination may be used. In particular, those containing carbon black are preferred.

As carbon black, for example, at least one of furnace black, thermal black, channel black, lamp black and acetylene black may be used, or two or more thereof may be used in combination.

Use of carbon black previously masterbatched is also preferred to facilitate dispersion.

In the case where the thermoplastic resin composition A contains a light-absorbing colorant, the content thereof is preferably 0.001 to 5 parts by mass relative to 100 parts by mass of the thermoplastic resin. The lower limit of the content is preferably 0.01 parts by mass or more, more preferably 0.05 parts by mass or more, still more preferably 0.1 parts by mass or more, and even more preferably 0.2 parts by mass or more. With a content equal to or more than the lower limit, the resulting first member is colored with enhanced designability. The upper limit of the content is preferably 3 parts by mass or less, more preferably 2 parts by mass or less, still more preferably 1 part by mass or less, even more preferably 0.8 parts by mass or less, and furthermore preferably 0.5 parts by mass or less. With a content equal to or less than the upper limit, the light-absorbing colorant is effectively prevented from bleeding out.

The thermoplastic resin composition A may contain only one type of light-absorbing colorant, or may contain two or more types. In the case where two or more types are included, it is preferable that the total amount be within the range.

Further, the colorant in the thermoplastic resin composition A includes any one of the light-transmitting colorant and the light-absorbing colorant with a content of preferably 95 mass% or more, more preferably 98 mass% or more, and still more preferably 99 mass% or more.

### <<Reinforcing material>>

The thermoplastic resin composition A in the present embodiment may contain a reinforcing material. By containing a reinforcing material, the resulting structure can have improved mechanical strength. The details of the reinforcing material are the same as with the reinforcing material that may be blended in the thermoplastic resin composition B described later, and the preferred range is also the same.

The thermoplastic resin composition A in the present embodiment contains a reinforcing material (preferably glass fiber) with a content of preferably 10 parts by mass or more, more preferably 20 parts by mass or more, still more preferably 35 parts by mass or more, and even more preferably 48 parts by mass or more, relative to 100 parts by mass of a thermoplastic resin (preferably polybutylene terephthalate resin). With a content equal to or more than the lower limit, the mechanical strength of the resulting structure tends to increase. The content of the reinforcing material (preferably glass fiber) is preferably 100 parts by mass or less, more preferably 90 parts by mass or less, still more preferably 80 parts by mass or less, even more preferably 70 parts by mass or less, and furthermore preferably 60 parts by mass or less, relative to 100 parts by mass of the thermoplastic resin (preferably polybutylene terephthalate resin). With a content equal to or less than the upper limit, the appearance of the structure tends to be improved and the fluidity of the thermoplastic resin composition A tends to be more improved.

The content of the reinforcing material (preferably glass fiber) in the thermoplastic resin composition A in the present embodiment is preferably 10 mass% or more, more preferably 15 mass% or more, still more preferably 20 mass% or more, and even more preferably 25 mass% or more. The content of the reinforcing material (preferably glass fiber) in the thermoplastic resin composition A is more preferably 50 mass% or less, still more preferably 45 mass% or less, even more preferably 40 mass% or less, and furthermore preferably 35 mass% or less. With a content equal to or more than the lower limit, the mechanical strength tends to be more enhanced. With a content equal to or less than the upper limit, the appearance of the structure is improved and the fluidity of the thermoplastic resin composition A tends to be more improved during melting.

The thermoplastic resin composition A in the present embodiment may contain only one type of reinforcing material (preferably glass fiber), or may contain two or more types. In the case where two or more types are contained, it is preferable that the total amount be within the range.

### <<Other components>>

The thermoplastic resin composition A of the present embodiment may contain other components on an as needed basis in addition to those described above, as long as the desired physical properties are not significantly impaired. Examples of the other components include various resin additives. Only one type of the other components may be contained or two or more types may be contained in any combination and at any ratio.

Specific examples thereof include stabilizers, release agents, flame retardants, reactive compounds such as moist-heat resistance improvers, impact resistance improvers, nucleating agent, ultraviolet absorbers, antistatic agents, antifogging agents, antiblocking agents, fluidity improvers, plasticizers, dispersants, antibacterial agents, and laser printing improvers. The thermoplastic resin composition A of the present embodiment may contain at least one of a stabilizer and a release agent. The details of the stabilizer and release agent are the same as with the stabilizer and release agent that may be blended in the thermoplastic resin composition B described later, and the preferred ranges are also the same. It is preferable that the amounts blended be in the same range.

Further, it is preferable that the thermoplastic resin composition A in the present embodiment contain substantially no electrically conductive carbon compound (furthermore, an electrically conductive compound). Containing substantially no electrically conductive carbon compound (furthermore, electrically conductive compound) means that the content of the electrically conductive carbon compound (furthermore, electrically conductive compound) relative to 100 parts by mass of the thermoplastic resin is, for example, less than 0.01 parts by mass, preferably less than 0.001 parts by mass, and more preferably less than 0.0001 parts by mass.

Further, the thermoplastic resin composition A in the present embodiment may be laser-printed for use.

### <Thermoplastic resin composition B>

The thermoplastic resin composition B is a resin composition containing a thermoplastic resin, with a test piece formed therefrom to a thickness of 2 mm having a transmittance of less than 50.0% determined according to Formula (C) at a frequency of 76.5 GHz, and a test piece formed therefrom to a thickness of 2 mm having an absorptance of 40.0% or more determined according to Formula (A) at a frequency of 76.5 GHz. With a transmittance of less than 50.0%, the electromagnetic wave noise can be effectively suppressed and the electromagnetic waves opposed to the second member hardly transmit through. In the case where a housing includes the first member and the second member, electromagnetic waves leaking from inside hardly transmit through. The absorptance, transmittance and reflectance are achieved by using an electrically conductive carbon compound such as carbon nanotube.

The transmittance (2 mm thick) is less than 50.0%, preferably 45.0% or less, more preferably 38.0% or less, still more preferably 25.0% or less, even more preferably 10.0% or less, and furthermore preferably 5.0% or less. With a transmittance equal to or less than the upper limit, the electromagnetic wave noise which affects the element or is emitted from the element tends to be more effectively suppressed. The lower limit of the transmittance may be 0%, being practically 0.1% or more.

It is preferable that a 3 mm thick molding (preferably 100 mm × 100 mm × 3 mm thick) of the thermoplastic resin composition B have a transmittance of 26.0% or less determined according to Formula (C) at a frequency of 76.5 GHz.

The transmittance (3 mm thick) is preferably 24.0% or less, more preferably 21.0% or less, and still more preferably 15.0% or less. Although the lower limit is ideally 0%, the required performance is sufficiently satisfied even with a transmittance of 4.0% or more.

The absorptance (2 mm thick) is 40.0% or more, preferably 45.0% or more, more preferably 50.0% or more, still more preferably 55.0% or more, even more preferably 60.0% or more, and furthermore preferably 65.0% or more. Although the upper limit is ideally 100%, the required performance is sufficiently satisfied even with an absorptance of 90.0% or less.

It is preferable that a 3 mm thick molding (preferably 100 mm × 100 mm × 3 mm thick) of the thermoplastic resin composition B have an absorptance of 63.0 to 100% determined according to Formula (A) at a frequency of 76.5 GHz.

The absorptance (3 mm thick) is preferably 57.0% or more, more preferably 59.0% or more, still more preferably 64.0% or more, even more preferably 66.0% or more, and furthermore preferably 70.0% or more. Although the upper limit is ideally 100%, the required performance is sufficiently satisfied even with an absorptance of 90.0% or less.

In the present embodiment, it is preferable that a 2 mm thick molding of the thermoplastic resin composition B have a reflectance of 50.0% or less determined according to Formula (B) at a frequency of 76.5 GHz.

The reflectance (2 mm thick) is preferably 45.0% or less, more preferably 40.0% or less, still more preferably 35.0% or less, even more preferably 30.0% or less, and furthermore preferably 25.0% or less. Although the lower limit is ideally 0%, the required performance is sufficiently satisfied even with a reflectance of 1.0% or more.

It is preferable that a 3 mm thick molding (preferably 100 mm × 100 mm × 3 mm thick) of the thermoplastic resin composition B have a reflectance of 38.0% or less determined according to Formula (B) at a frequency of 76.5 GHz.

The reflectance (3 mm thick) is preferably 33.0% or less, more preferably 28.0% or less, still more preferably 24.0% or less, even more preferably 20.0% or less, and furthermore preferably 16.5% or less. Although the lower limit is ideally 0%, the required performance is sufficiently satisfied even with a reflectance of 3.0% or more or 8.0% or more.

Subsequently, the components contained in the thermoplastic resin composition B are explained as follows. The thermoplastic resin composition B is not particularly defined as long as it contains a thermoplastic resin and satisfies predetermined transmittance and absorbance. It is preferable that the thermoplastic resin composition B contain a thermoplastic resin and an electrically conductive compound, and may further contain a stabilizer, a release agent, a reinforcing agent, and other components.

### <<Thermoplastic resin>>

Preferred examples of the thermoplastic resins used in the present embodiment include polyester resins (thermoplastic polyester resins); polyamide resins; polycarbonate resins; polystyrene-based resins; polyolefin resins such as polyethylene resins, polypropylene resins and cyclic cycloolefin resins; polyacetal resins; polyimide resins; polyetherimide resin; polyurethane resins; polyphenylene ether resins; polyphenylene sulfide resins; polysulfone resins; and polymethacrylate resins. It is more preferable that the thermoplastic resin be selected from polyester resins, polycarbonate resins and polyamide resins. It is still more preferable that the thermoplastic resin include a polyester resin, and even more preferable that the thermoplastic resin include a polybutylene terephthalate resin.

Each of the thermoplastic resins are described in more detail as follows.

### <<Polyester resin>>

As the polyester resin, a known thermoplastic polyester resin may be used. A polyethylene terephthalate resin and a polybutylene terephthalate resin are preferred, and containing at least a polybutylene terephthalate resin is more preferred.

The polybutylene terephthalate resin for use in the resin composition in the present embodiment is a polyester resin having a structure with a terephthalic acid unit ester-bonded to a 1,4-butanediol unit, including in addition to a polybutylene terephthalate resin (homopolymer), a polybutylene terephthalate copolymer containing copolymer components other than the terephthalic acid unit and 1,4-butanediol unit, and a mixture of a homopolymer and a polybutylene terephthalate copolymer.

The polybutylene terephthalate resin may contain one or more dicarboxylic acid units other than terephthalic acid.

Specific examples of the other dicarboxylic acids include aromatic dicarboxylic acids such as isophthalic acid, orthophthalic acid, 1,5-naphthalene dicarboxylic acid, 2,5-naphthalene dicarboxylic acid, 2,6-naphthalene dicarboxylic acid, biphenyl-2,2'-dicarboxylic acid, biphenyl-3,3'-dicarboxylic acid, biphenyl-4,4'-dicarboxylic acid, bis(4,4'-carboxyphenyl)methane, anthracene dicarboxylic acid, and 4,4'-diphenyl ether dicarboxylic acid, alicyclic dicarboxylic acids such as 1,4-cyclohexane dicarboxylic acid and 4,4'-dicyclohexyl dicarboxylic acid, and aliphatic dicarboxylic acids such as adipic acid, sebacic acid, azelaic acid, and a dimer acid.

In the polybutylene terephthalate resin for use in the present embodiment, the terephthalic acid unit content in the entire dicarboxylic acid units is preferably 80 mol% or more, more preferably 90 mol% or more.

The diol unit may contain one or more diol units in addition to 1,4-butanediol.

Specific examples of the other diol units include aliphatic or alicyclic diols having 2 to 20 carbon atoms and bisphenol derivatives. Specific examples include ethylene glycol, propylene glycol, 1,5-pentanediol, 1,6-hexanediol, neopentyl glycol, decamethylene glycol, cyclohexane dimethanol, 4,4'-dicyclohexylhydroxymethane, 4,4'-dicyclohexylhydroxypropane, and ethylene oxide addition diol of bisphenol A. In addition to the bifunctional monomers described above, a small amount of trimellitic acid, trimesic acid, pyromellitic acid, or pentaerythritol for introducing a branched structure, trifunctional monomers such as trimethylolpropane, and monofunctional compounds such as fatty acids for molecular weight adjustment may be also used in combination.

In the polybutylene terephthalate resin for use in the present embodiment, the 1,4-butanediol unit content in the entire diol units is preferably 80 mol% or more, more preferably 90 mol% or more.

As described above, it is preferable that the polybutylene terephthalate resin be a polybutylene terephthalate homopolymer obtained by polycondensation of terephthalic acid and 1,4-butanediol. Alternatively, the polybutylene terephthalate copolymer may contain one or more dicarboxylic acids other than the terephthalic acid as carboxylic acid units and/or one or more diols other than the 1,4-butanediol as diol units. In the case where the polybutylene terephthalate resin is a polybutylene terephthalate resin modified by copolymerization, specific examples of the preferred copolymers include polyester ether resins obtained by copolymerizing polyalkylene glycols, particularly polytetramethylene glycol, dimer acid-copolymerized polybutylene terephthalate resins, and isophthalic acid-copolymerized polybutylene terephthalate resin. In particular among them, it is preferable to use polyester ether resins obtained by copolymerizing polytetramethylene glycol.

Incidentally, these copolymers refer to those having a copolymerization amount of 1 mol% or more and less than 50 mol% in all the segments of the polybutylene terephthalate resin. In particular, the copolymerization amount is preferably 2 mol% or more and less than 50 mol%, more preferably 3 to 40 mol%, and still more preferably 5 to 20 mol%. With such a copolymerization ratio, the fluidity, toughness, and tracking resistance tend to be preferably improved.

The amount of the terminal carboxyl group in the polybutylene terephthalate resin may be appropriately selected and determined to be usually 60 eq/ton or less, preferably 50 eq/ton or less, and more preferably 30 eq/ton or less. With an amount equal to or less than the upper limit, the alkali resistance and hydrolysis resistance tend to be improved. The lower limit of the amount of the terminal carboxyl group is not particularly specified, and usually 10 eq/ton or more in consideration of productivity of the polybutylene terephthalate resin.

The amount of terminal carboxyl group in the polybutylene terephthalate resin is a value measured by dissolving 0.5 g of polybutylene terephthalate resin in 25 mL of benzyl alcohol and titrating with 0.01 mol/L sodium hydroxide benzyl alcohol solution. As a method for adjusting the amount of the terminal carboxyl groups, any conventionally known method such as a method of adjusting polymerization conditions such as the raw material charge ratio, the polymerization temperature, and a decompression method during polymerization, and a method for reacting with a terminal blocking agent.

It is preferable that the intrinsic viscosity of the polybutylene terephthalate resin be 0.5 to 2 dL/g. From the viewpoints of moldability and mechanical properties, those having an intrinsic viscosity in the range of 0.6 to 1.5 dL/g are more preferred. With an intrinsic viscosity controlled to 0.5 dL/g or more, the mechanical strength of the resulting resin composition tends to be more improved. With an intrinsic viscosity controlled to 2 dL/g or less, the fluidity of the resin composition tends to be more improved, and the moldability tends to be improved.

The intrinsic viscosity of the polybutylene terephthalate resin is a value measured at 30°C in a mixed solvent of tetrachloroethane and phenol at a mass ratio of 1:1.

The polybutylene terephthalate resin may be produced by melt-polymerizing dicarboxylic acid components mainly composed of terephthalic acid or an ester derivative thereof and diol components mainly composed of 1,4-butanediol in a batch or continuous method. Further, after producing a polybutylene terephthalate resin having a low molecular weight by melt polymerization, the degree of polymerization (or molecular weight) may be increased to a desired value by solid-phase polymerization under a nitrogen stream or under reduced pressure.

It is preferable that the polybutylene terephthalate resin be produced by continuous melt polycondensation of a dicarboxylic acid component mainly composed of terephthalic acid and a diol component mainly composed of 1,4-butanediol.

The catalyst used for the esterification reaction may be a conventionally known one, and examples thereof include titanium compounds, tin compounds, magnesium compounds, and calcium compounds. In particular among these, titanium compounds are preferred. Specific examples of the titanium compounds as the esterification catalyst include titanium alcoholates such as tetramethyl titanate, tetraisopropyl titanate and tetrabutyl titanate, and titanium phenolates such as tetraphenyl titanate.

As for the polyester resin, in addition to the above, the descriptions in paragraphs 0013 to 0016 of Japanese Patent Laid-Open No. 2010-174223 may be referred to.

### <<Polycarbonate resin>>

The polycarbonate resin is an optionally branched homopolymer or copolymer obtained by reacting a dihydroxy compound or a dihydroxy compound plus a small amount of a polyhydroxy compound with phosgene or a carbonic acid diester. The method for producing the polycarbonate resin is not particularly limited, and one produced by a conventionally known phosgene method (interfacial polymerization method) or melting method (transesterification method) may be used.

The dihydroxy compound as raw material is preferably an aromatic dihydroxy compound. Examples thereof include 2,2-bis(4-hydroxyphenyl)propane (=bisphenol A), tetramethyl bisphenol A, bis(4-hydroxyphenyl)-p-diisopropylbenzene, hydroquinone, resorcinol, and 4,4-dihydroxydiphenyl, and bisphenol A is preferred. A compound including one or more tetraalkyl phosphonium sulfonates bonded to the aromatic dihydroxy compound may be also used.

Among the polycarbonate resins described above, aromatic polycarbonate resins derived from 2,2-bis(4-hydroxyphenyl)propane, or aromatic polycarbonate copolymers derived from 2,2-bis(4-hydroxyphenyl)propane and other aromatic dihydroxy compounds are preferred. Alternatively, a copolymer mainly composed of an aromatic polycarbonate resin such as a copolymer including a polymer or oligomer having a siloxane structure may be employed. Furthermore, two or more of the polycarbonate resins described above may be mixed for use.

In order to adjust the molecular weight of polycarbonate resins, a monohydric aromatic hydroxy compound may be used, and examples thereof include m- and p-methyl phenols, m- and p-propyl phenols, p-tert-butyl phenol, and p-long-chain alkyl substituted phenols.

The polycarbonate resin has a viscosity-average molecular weight (Mv) of preferably 5000 or more, more preferably 10000 or more, and still more preferably 13000 or more. With use of those having a viscosity average molecular weight of 5000 or more, the mechanical strength of the resulting resin composition tends to be further improved. The polycarbonate resin has a viscosity-average molecular weight (Mv) of preferably 60000 or less, more preferably 40000 or less, and still more preferably 30000 or less. With use of those having a viscosity average molecular weight of 60000 or less, the fluidity of the resin composition is improved, so that the moldability tends to be improved.

In the case where two or more types of polycarbonate resins are included, it is preferable that the mixture satisfies the ranges described above. (In the following, the same consideration applies to the molecular weight.)

In the present embodiment, the viscosity average molecular weight (Mv) of the polycarbonate resin is a value obtained from the calculation of the following Schnell viscosity equation based on the measurement of the viscosity of a methylene chloride solution of the polycarbonate resin at 20°C using an Ubbelohde viscometer to determine the intrinsic viscosity ([η]).$\left[η\right] = 1.23 \times {10}^{-4} {Mv}^{0.83}$

The method for producing the polycarbonate resin is not particularly limited, and polycarbonate resins produced by any of the phosgene method (interfacial polymerization method) or the melt method (transesterification method) may be used. Further, a polycarbonate resin prepared by subjecting the polycarbonate resin produced by a melting method to a post-treatment for adjusting the amount of terminal OH groups is also preferred.

### <<Polyamide resin>>

The polyamide resin is a polymer having a structural unit of acid amide obtained by ring-opening polymerization of a lactam, polycondensation of an amino carboxylic acid, or polycondensation of a diamine and a dibasic acid, which may be an aliphatic polyamide resin or a semi-aromatic polyamide resin.

Specific examples thereof include polyamides 6, 11, 12, 46, 66, 610, 612, 6I, 6/66, 6T/6I, 6/6T, 66/6T, 66/6T/6I, 9T and 10T, a xylylene diamine-based polyamide resin described in detail in the following, polytrimethyl hexamethylene terephthalamide, polybis(4-aminocyclohexyl)methane dodecanamide, polybis(3-methyl-4-aminocyclohexyl)methane dodecanamide, and polyundecamethylene hexahydro terephthalamide. Incidentally, in the above, "I" represents an isophthalic acid component, and "T" represents a terephthalic acid component. As the polyamide resin, the description in paragraphs 0011 to 0013 of Japanese Patent Laid-Open No. 2011-132550 may be referred to.

The polyamide resin used in the present embodiment includes a diamine-derived structural unit and a dicarboxylic acid-derived structural unit, being preferably a xylylene diamine-based polyamide resin with a xylene diamine-derived structural unit content of 50 mol% or more in the diamine-derived structural unit. The xylylene diamine-based polyamide resin includes diamine-derived structural units with a content of at least one of meta-xylylene diamine and para-xylylene diamine of preferably 70 mol% or more, more preferably 80 mol% or more, still more preferably 90 mol% or more, and furthermore preferably 95 mol% or more. The xylylene diamine-based polyamide resin includes dicarboxylic acid-derived structural units with a content of α,ω-straight-chain aliphatic dibasic acids having 4 to 20 carbon atoms of preferably 50 mol% or more, more preferably 70 mol% or more, still more preferably 80 mol% or more, furthermore preferably 90 mol% or more, and furthermore preferably 95 mol% or more. As the α,ω-straight-chain aliphatic dicarboxylic acids having 4 to 20 carbon atoms, adipic acid, sebacic acid, suberic acid, dodecanedioic acid, and eicodioic acid may be preferably used, and adipic acid and sebacic acid are more preferred.

Examples of the diamines other than meta-xylylene diamine and para-xylylene diamine which can be used as raw material diamine components for xylylene diamine-based polyamide resins include aliphatic diamines such as tetramethylene diamine, pentamethylene diamine, 2-methylpentane diamine, hexamethylenediamine, heptamethylene diamine, octamethylene diamine, nonamethylene diamine, decamethylene diamine, dodecamethylene diamine, 2,2,4-trimethyl-hexamethylene diamine, and 2,4,4-trimethylhexamethylene diamine, alicyclic diamines such as 1,3-bis(aminomethyl)cyclohexane, 1,4-bis(aminomethyl)cyclohexane, 1,3-diaminocyclohexane, 1,4-diaminocyclohexane, bis(4-aminocyclohexyl)methane, 2,2-bis(4-amino cyclohexyl) propane, bis(aminomethyl)decalin, and bis(aminomethyl)tricyclodecane, and diamines having an aromatic ring such as bis(4-aminophenyl)ether, paraphenylenediamine, bis(aminomethyl)naphthalene, and one or a mixture of two or more thereof may be used.

Examples of the dicarboxylic acid components other than the α,ω-straight-chain aliphatic dicarboxylic acids having 4 to 20 carbon atoms include phthalic acid compounds such as isophthalic acid, terephthalic acid and orthophthalic acid, naphthalene dicarboxylic acid isomers such as 1,2-naphthalene dicarboxylic acid, 1,3-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, and 2,7-naphthalene dicarboxylic acid, and one or a mixture of two or more thereof may be used.

### <<Polystyrene-based resin>>

Examples of the polystyrene-based resins include homopolymers of styrene-based monomers, and copolymers of a styrene-based monomer and a monomer copolymerizable with the styrene-based monomer. Examples of the styrene-based monomers include styrene, α-methylstyrene, chlorostyrene, methylstyrene, and tert-butylstyrene. In the styrene-based resin in the present embodiment, 50 mol % or more of the monomer units are styrene-based monomers.

More specific examples of the polystyrene-based resins include resins such as polystyrene resins, acrylonitrile-styrene copolymers (AS resins), highly impact-resistant polystyrene resins (HIPS), acrylonitrile-butadiene-styrene copolymers (ABS resins), acrylonitrile-acrylic rubber-styrene copolymers (AAS resins), acrylonitrile-styrene-acrylic rubber copolymers (ASA resins), acrylonitrile-ethylene propylene-based rubber-styrene copolymers (AES resins), and styrene-IPN type rubber copolymers.

In the present embodiment, the styrene-based resins are preferably acrylonitrile-styrene copolymers (AS resins), highly impact-resistant polystyrene resins (HIPS), acrylonitrile-butadiene-styrene copolymers (ABS resins), acrylonitrile-acrylic rubber-styrene copolymers (AAS resins), acrylonitrile-styrene-acrylic rubber copolymers (ASA resins), acrylonitrile-ethylene propylene-based rubber-styrene copolymers (AES resins), and styrene-IPN type rubber copolymer, more preferably highly impact-resistant polystyrene resins (HIPS), and still more preferably butadiene rubber-containing polystyrenes.

In the case where the polystyrene-based resin contains a rubber component, the rubber component content in the polystyrene-based resin is preferably 3 to 70 mass%, more preferably 5 to 50 mass%, and still more preferably 7 to 30 mass%. With a rubber component content of 3 mass% or more, the impact resistance tends to be improved, and with a content of 70 mass% or less, the flame retardancy tends to be preferably improved. Further, the average particle size of the rubber component is preferably 0.05 to 10 µm, more preferably 0.1 to 6 µm, and still more preferably 0.2 to 3 µm. With an average particle size of 0.05 µm or more, the impact resistance tends to be improved, and with an average particle size of 10 µm or less, the appearance tends to be preferably improved.

The weight average molecular weight of the polystyrene-based resin is usually 50000 or more, preferably 100000 or more, more preferably 150000 or more, and usually 500000 or less, preferably 400000 or less, more preferably 300000 or less. Further, the number average molecular weight is usually 10000 or more, preferably 30000 or more, more preferably 50000 or more, and preferably 500000 or less, more preferably 300000 or less.

The melt flow rate (MFR) of the polystyrene-based resin measured according to JIS K7210 (temperature: 200°C, load: 5 kgf) is preferably 0.1 to 30 g/10 minutes, and more preferably 0.5 to 25 g/10 minutes. With an MFR of 0.1 g/10 minutes or more, the fluidity tends to be improved, and with an MFR of 30 g/10 minutes or less, the impact resistance tends to be improved.

Examples of the methods for producing the polystyrene-based resins include known methods such as emulsion polymerization, solution polymerization, suspension polymerization, and bulk polymerization.

The content of the thermoplastic resin in the thermoplastic resin composition B of the present embodiment is preferably 30 mass% or more, more preferably 35 mass% or more, still more preferably 40 mass% or more, even more preferably 45 mass% or more, and furthermore preferably 50 mass% or more. With a content equal to or more than the lower limit, the fluidity during injection molding tends to be more improved. The content of the thermoplastic resin in the thermoplastic resin composition B is more preferably 96 mass% or less, still more preferably 93 mass% or less, and may be 90 mass% or less. In the case where a reinforcing material is further contained, the content of the thermoplastic resin is preferably 85 mass% or less, more preferably 80 mass% or less, still more preferably 75 mass% or less, and even more preferably 70 mass% or less. With a content equal to or less than the upper limit, the mechanical strength of the resulting structure tends to be more improved.

The thermoplastic resin composition B of the present embodiment may contain only one type of thermoplastic resin, or may contain two or more types. In the case where two or more types are included, it is preferable that the total content be within the range.

### <Electrically conductive compound>

It is preferable that the thermoplastic resin composition B in the present embodiment contain an electrically conductive compound. By containing an electrically conductive compound, the absorptance of the second member can be increased. Further, the reflectance and transmittance of the second member can be reduced.

Examples of the electrically conductive compound used in the present embodiment include metals, metal oxides, electrically conductive carbon compounds and electrically conductive polymers, and electrically conductive carbon compounds are preferred.

Examples of the metals include copper, nickel, silver, and stainless steel, and metal fillers, stainless steel fibers, and magnetic fillers are preferred. Examples of the metal oxides include alumina and zinc oxide, and alumina fibers and zinc oxide nanotubes are preferred. Examples of the electrically conductive carbon compounds include carbon black, graphene, graphite, fullerene, carbon nanocoil, carbon nanotube, and carbon fiber are preferred, and carbon nanotube is more preferred.

Fibers coated with metals, metal oxides, or electrically conductive carbon compounds are also preferred. Examples thereof include carbon-coated potassium titanate whiskers and metal-coated fibers.

It is preferable that the electrically conductive compound in the present embodiment be in a relatively thin and long shape such as fibrous, tubular, or whisker-like shape.

The diameter (number average fiber diameter) of the electrically conductive compound is preferably 0.5 nm to 100 nm, more preferably 1 to 30 nm. The aspect ratio of the electrically conductive compound is preferably 5 or more, more preferably 50 or more, from the viewpoint of imparting good electromagnetic wave absorbability. The upper limit of the aspect ratio is, for example, 500 or less, though not particularly specified.

Carbon nanotubes are preferred as the electrically conductive carbon compound used in the present embodiment. The carbon nanotubes are single-layer carbon nanotubes and/or multi-layer carbon nanotubes, and preferably include at least a multi-layer carbon nanotube. A carbon material partially having a carbon nanotube structure may be also used. The carbon nanotube is not limited to a cylindrical shape, and may have a coiled shape spirally rounding at a pitch of 1 µm or less.

Carbon nanotubes are commercially available, and examples thereof include carbon nanotubes available from Bayer Material Science AG, Nanosil, Showa Denko K.K., or Hyperion Catalysis International Inc. Incidentally, the carbon nanotube may be also referred to as graphite fibril, carbon fibril, carbon nanofiber, or carbon nanostructure.

In the present embodiment, the electrically conductive compound may be compounded with a thermoplastic resin into a masterbatch. In that case, the thermoplastic resin is selected from the thermoplastic resins described above. For example, in the case where the thermoplastic resin as main component is a polybutylene terephthalate resin, the thermoplastic resin to make a masterbatch is preferably a polybutylene terephthalate resin, a polystyrene-based resin, a polyolefin resin or a polycarbonate resin, more preferably a polybutylene terephthalate resin or a polystyrene resin. The concentration of the thermoplastic resin in a masterbatch is preferably 99.5 mass% or less, more preferably 95 mass% or less, and preferably 5 mass% or more, more preferably 10 mass% or more, still more preferably 30 mass% or more, and even more preferably 50 mass% or more. With a content controlled in the range from the upper limit to the lower limit, the dispersibility of the electrically conductive compound (in particular, electrically conductive carbon compound) into the thermoplastic resin as main component tends to be more improved.

The thermoplastic resin as main component is not necessarily made of only one type as described above, and may be obviously made of a mixture of two or more types.

The content of the electrically conductive compound (preferably carbon nanotube) in the thermoplastic resin composition B of the present embodiment is preferably 0.01 mass% or more, more preferably 0.05 mass% or more, still more preferably 0.10 mass% or more, and may be 0.20 mass% or more, still more may be 0.40 mass% or more, and in particular, 0.50 mass% or more, or may be 0.70 mass% or more. With a content equal to or more than the lower limit, the electromagnetic wave absorbability is exhibited effectively. The content of the electrically conductive compound (preferably carbon nanotube) in the thermoplastic resin composition B of the present embodiment is preferably 10.0 mass% or less, more preferably 8.0 mass% or less, still more preferably 6.0 mass% or less, even more preferably 4.0 mass% or less, furthermore preferably 3.0 mass% or less, and may be 2.0 mass% or less. With a content equal to or less than the upper limit, the fluidity of the resin tends to be more improved.

The thermoplastic resin composition B of the present embodiment contains an electrically conductive compound (preferably carbon nanotube) with a content relative to 100 parts by mass of the thermoplastic resin of preferably 0.01 parts by mass or more, more preferably 0.05 parts by mass or more, still more preferably 0.1 parts by mass or more, even more preferably 0.5 parts by mass or more, and furthermore preferably 1.0 part by mass or more. With a content equal to or more than the lower limit, the electromagnetic wave absorbability is exhibited effectively. The thermoplastic resin composition B of the present embodiment contains an electrically conductive compound (preferably carbon nanotube) with a content relative to 100 parts by mass of the thermoplastic resin of preferably 10.0 parts by mass or less, more preferably 8.0 parts by mass or less, still more preferably 6.0 parts by mass or less, even more preferably 4.0 parts by mass or less, furthermore preferably 3.0 parts by mass or less, and the content may be 2.5 parts by mass or less. With a content equal to or less than the upper limit, the fluidity of the resin tends to be more improved.

The thermoplastic resin composition B of the present embodiment may contain only one type of the electrically conductive compound, or may contain two or more types thereof. In the case where two or more types are included, it is preferable that the total content be within the range.

### <<Reinforcing material>>

The thermoplastic resin composition B of the present embodiment may contain a reinforcing material. By containing a reinforcing material, the resulting structure can have an improved mechanical strength.

The type of the reinforcing material that can be used in the present embodiment is not particularly specified. Any of fibers, fillers, beads may be used, and fibers are preferred.

In the case where the reinforcing material is a fiber, it may be made of short fibers or long fibers.

In the case where the reinforcing material is made of short fibers, fillers, or beads, examples of the thermoplastic resin composition B in the present embodiment include a pellet, a pulverized product of the pellet, and a film formed from the pellet.

In the case where the reinforcing material is made of long fibers, examples of the reinforcing material include long fibers for use as so-called UD (Uni-Directional) material, and long fibers in a sheet form such as woven fabric and knitted fabric. In the case of using these long fibers, components other than the reinforcing material of the thermoplastic resin composition B in the present embodiment are impregnated into the long fibers in a sheet form as reinforcing material so as to make a thermoplastic resin composition B in a sheet form (for example, a prepreg).

Examples of the raw materials for the reinforcing material include inorganic substances such as glass, carbon (carbon fiber, etc.), alumina, boron, ceramics, metals (steel, etc.), and organic substances such as plants (including Kenaf, bamboo, etc.), aramid, polyoxymethylene, aromatic polyamide, polyparaphenylene benzobisoxazole, and ultrahigh molecular weight polyethylene, and glass is preferred.

It is preferable that the thermoplastic resin composition B in the present embodiment contain glass fibers as reinforcing material.

The glass composition of the glass fibers is selected from A glass, C glass, E glass, R glass, D glass, M glass, and S glass, and E glass (alkali-free glass) is particularly preferred.

Glass fibers refer to a fibrous material having a true circular or polygonal cross-section when cut perpendicular to the length direction. The glass fibers include single fibers having a number average fiber diameter of usually 1 to 25 µm, preferably 5 to 17 µm. With a number average fiber diameter controlled to 1 µm or more, the moldability of the thermoplastic resin composition B tends to be more improved. With a number average fiber diameter controlled to 25 µm or less, the appearance of the resulting structure tends to be improved and the reinforcing effect tends to be also improved. The glass fibers may be made of a single fiber or a plurality of twisted single fibers.

The forms of glass fibers may be any of a glass roving obtained by continuously winding a single fiber or a plurality of twisted fibers, chopped strands cut to a length of 1 to 10 mm (i.e., glass fibers with a number average fiber length of 1 to 10 mm), and milled fibers pulverized to a length of about 10 to 500 µm (i.e., glass fibers having a number average fiber length of 10 to 500 µm), and chopped strands cut to a length of 1 to 10 mm are preferred. The glass fibers having a different form may be also used in combination.

As the glass fibers, ones having a variant cross-sectional shape are also preferred. The variant cross-sectional shape has an oblateness defined by the ratio of major axis to minor axis of a cross section perpendicular to the length direction of the fiber of, for example, 1.5 to 10, preferably 2.5 to 10, more preferably 2.5 to 8, and particularly preferably 2.5 to 5.

The glass fibers may be surface-treated with, for example, a silane-based compound, an epoxy-based compound, or a urethane-based compound, or may be oxidized, in order to improve the affinity with resin components as long as the properties of the thermoplastic resin composition B in the present embodiment are not significantly impaired.

The thermoplastic resin composition B of the present embodiment contains a reinforcing material (preferably glass fiber) with a content of preferably 10 parts by mass or more, more preferably 20 parts by mass or more, still more preferably 35 parts by mass or more, and even more preferably 48 parts by mass or more, relative to 100 parts by mass of the thermoplastic resin (preferably polybutylene terephthalate resin). With a content equal to or more than the lower limit, the mechanical strength of the resulting structure tends to be more increased. The content of the reinforcing material (preferably glass fiber) is preferably 100 parts by mass or less, more preferably 90 parts by mass or less, still more preferably 80 parts by mass or less, even more preferably 70 parts by mass or less, and furthermore preferably 60 parts by mass or less, relative to 100 parts by mass of the thermoplastic resin (preferably polybutylene terephthalate resin). With a content equal to or less than the upper limit, the appearance of the structure tends to be improved and the fluidity of the thermoplastic resin composition B tends to be more improved.

The content of a reinforcing material (preferably glass fibers) in the thermoplastic resin composition B in the present embodiment is preferably 10 mass% or more, more preferably 15 mass% or more, still more preferably 20 mass% or more, and furthermore preferably 25 mass% or more, in the thermoplastic resin composition B. The content of the reinforcing material (preferably glass fibers) in the thermoplastic resin composition B is preferably 50 mass% or less, more preferably 45 mass% or less, still more preferably 40 mass% or less, and furthermore preferably 35 mass% or less. With a content equal to or more than the lower limit, the mechanical strength tends to be more increased. With a content equal to or less than the upper limit, the appearance of a structure tends to be improved and the fluidity of the thermoplastic resin composition B during melting tends to be more improved.

The thermoplastic resin composition B in the present embodiment may contain only one reinforcing material (preferably glass fibers), or may contain two or more reinforcing materials. In the case where two or more types are included, it is preferable that the total content be within the range.

### <<Stabilizer>>

The thermoplastic resin composition B of the present embodiment may contain a stabilizer. As the stabilizer, a phosphorus-based stabilizer and/or a phenol-based stabilizer are preferably contained.

As the phosphorus-based stabilizer, any known one may be used. Specific examples include oxoacids of phosphorus such as phosphoric acid, phosphonic acid, phosphorous acid, phosphinic acid, and polyphosphoric acid; metal acid pyrophosphates such as sodium acid pyrophosphate, potassium acid pyrophosphate, and calcium acid pyrophosphate; phosphates of Group I or Group IIB metals such as potassium phosphate, sodium phosphate, cesium phosphate, and zinc phosphate; organic phosphate compounds, organic phosphite compounds, and organic phosphonite compounds, and organic phosphite compounds are particularly preferred.

Examples of phenol-based stabilizers include hindered phenol-based antioxidants.

For the details thereof, the description in paragraphs 0105 to 0111 in International Publication No. WO 2020/013127 may be referred to.

The content of a stabilizer relative to 100 parts by mass of the thermoplastic resin is usually 0.001 parts by mass or more, preferably 0.01 parts by mass or more, and usually 1 part by mass or less, preferably 0.5 parts by mass or less. With a content of the stabilizer equal to or more than the lower limit, the effect of the stabilizer is obtained more effectively. With a content of the stabilizer equal to or less than the upper limit, no levelling off of the effect is caused, so that cost saving can be achieved.

The thermoplastic resin composition B of the present embodiment may contain only one type of stabilizer, or may contain two or more types. In the case where two or more types are included, it is preferable that the total content be within the range.

### <<Release agent>>

It is preferable that the thermoplastic resin composition B of the present embodiment contain a release agent (lubricant).

Examples of the release agent include an aliphatic carboxylic acid, an ester of an aliphatic carboxylic acid and an alcohol, an aliphatic hydrocarbon compound having a number average molecular weight of 200 to 15000, a wax, and a polysiloxane-based silicone oil.

For the details thereof, the description in paragraphs 0112 to 0121 of International Publication No. WO 2020/013127 may be referred to.

The content of the release agent relative to 100 parts by mass of the thermoplastic resin is usually 0.001 parts by mass or more, preferably 0.01 parts by mass or more, and usually 2 parts by mass or less, preferably 1 part by mass or less. With a content of the release agent equal to or more than the lower limit, the effect of the release agent tends to be sufficiently obtained, and with a content of the release agent equal to or less than the upper limit, the sufficient hydrolysis resistance is obtained, and contamination of the mold during injection molding is less likely to occur.

### <<Other components>>

The thermoplastic resin composition B in the present embodiment may contain other components on an as needed basis in addition to those described above, as long as the desired physical properties are not significantly impaired. Examples of the other components include various resin additives. Only one type of the other components may be contained or two or more types may be contained in any combination and at any ratio.

Specific examples thereof include flame retardants, reactive compounds (e.g., epoxy compounds), pigments, dyes, ultraviolet absorbers, antistatic agents, antifogging agents, antiblocking agents, fluidity improvers, plasticizers, dispersants, and antibacterial agents. The thermoplastic resin composition B of the present embodiment preferably contains at least one of a stabilizer and a release agent.

The thermoplastic resin composition B of the present embodiment is adjusted such that the total content of a thermoplastic resin (preferably polybutylene terephthalate resin) and other optionally blended components is 100 mass%. In the thermoplastic resin composition B of the present embodiment, it is preferable that the total content of a thermoplastic resin, an electrically conductive compound (preferably carbon nanotube), and a reinforcing material (preferably glass fiber) be 95 mass% or more. It is also preferable that in the thermoplastic resin composition B of the present embodiment, the total content of a thermoplastic resin, an electrically conductive compound, a reinforcing material, a stabilizer, and a release agent, be 99 mass% or more.

It is also preferable that the thermoplastic resin composition B of the present embodiment contain substantially no light-absorbing colorant (for example, one having a maximum absorption wavelength in the wavelength range of 800 nm to 1100 nm, a black colorant, etc.). However, the light-absorbing colorant used here is meant to exclude those corresponding also to electrically conductive compounds. Further, the thermoplastic resin composition B may be in a form containing substantially no carbon black. The term "containing substantially no" refers to, for example, less than 0.01 parts by mass, preferably less than 0.001 parts by mass, and more preferably 0.0001 parts by mass, relative to 100 parts by mass of the thermoplastic resin.

### <Thermoplastic resin composition A and thermoplastic resin composition B>

In the present embodiment, the difference between the absorptance of a test piece of the thermoplastic resin composition A molded to a thickness of 2 mm determined according to Formula (A) at a frequency of 76.5 GHz and the absorptance of a test piece of the thermoplastic resin composition B molded to a thickness of 2 mm determined according to Formula (A) at a frequency of 76.5 GHz be 40% or more. With such a configuration, for example, the directivity of electromagnetic waves emitted from the element can be improved. The difference in the absorptance is preferably 50% or more. Although the upper limit of the difference in absorptance is ideally 100%, the required performance is sufficiently satisfied even with 90% or less. With a low radar absorptivity of the first member and a high radar absorptivity of the second member, the effect for improving the directivity of electromagnetic waves emitted while reducing the unnecessary noise at the same time can be expected.

In the present embodiment, preferably 80 mass%, more preferably 90 mass% or more, still more preferably 95 mass% or more of the resin components contained in the thermoplastic resin composition A and the thermoplastic resin composition B are in common. The resin components commonly used in the thermoplastic resin composition A and the thermoplastic resin composition B tend to improve the bonding strength between the member 1 and the member 2. Further, in the present embodiment, preferably 70 mass%, more preferably 80 mass% or more, still more preferably 85 mass% or more of the components of the thermoplastic resin composition A and the thermoplastic resin composition B are in common. The components of the thermoplastic resin composition A and the thermoplastic resin composition B in common in this way allow the molding shrinkage rate and the like to be the same, so that the bonding strength over time can be more effectively maintained at a high level.

### <Production method of thermoplastic resin composition>

Thermoplastic resin composition A and thermoplastic resin composition B can each be produced by a conventional method for preparing a resin composition. Usually, each component and various optional additives are thoroughly mixed together and then melt-kneaded with a single-screw or twin-screw extruder. Alternatively, without pre-mixing individual components, or with pre-mixing only a part thereof, the components may be fed to an extruder through a feeder so as to be melt-kneaded for preparation of the thermoplastic resin composition A and the thermoplastic resin composition B. As described above, a part of the components such as an electrically conductive compound and a light-transmitting coloring material may be melt-kneaded with the thermoplastic resin to prepare a masterbatch, and then the remaining components may be blended and melt-kneaded.

In the case of using a reinforcing material such as glass fiber, it is also preferable to supply the fiber from a side feeder in the middle of the cylinder of an extruder.

The heating temperature for melt-kneading may be appropriately selected from the range of 220 to 300°C. In the case where the temperature is too high, decomposition gas tends to be generated, which may cause opacification. Therefore, it is desirable to select a screw construction in consideration of shear heat generation or the like. In order to suppress decomposition during kneading and subsequent molding, it is desirable to use an antioxidant and a heat stabilizer.

### <Production method of first member and second member>

The method for producing a first member and a second member is not particularly limited, and any forming method commonly used for resin compositions may be employed. Examples thereof include injection molding, ultra-high speed injection molding, injection compression molding, two-color molding, hollow molding such as gas assist molding, forming using a heat insulating mold, forming using a rapid heat cycle mold, foam molding (including supercritical fluid), insert molding, IMC (in-mold coating molding) molding, extrusion molding method, sheet molding, thermoforming, rotational molding, laminate molding, press molding, and blow molding, and in particular, injection molding is preferred.

For the details of injection molding, the description in paragraphs 0113 to 0116 of Japanese Patent No. 6183822 may be referred to.

### <Structure and production method thereof>

In the structure of the present embodiment, the first member and the second member are joined at least partially, and usually joined only partially. The joint in the present embodiment includes an aspect in which at least a part of the surface of the first member and at least a part of the surface of the second member are in contact directly or through an adhesive or the like for integration of both of the members, and an aspect in which at least a part of the surface of the first member and at least a part of the surface of the second member are in direct contact with each other for integration of both of the members is preferred.

More specifically, it is preferable that the first member and the second member be joined by any one of laser welding, vibration welding, ultrasonic welding, two-color molding, insert molding, screwing, adhesion with an adhesive, and fitting. It is more preferable that joining be made by any one of laser welding, vibration welding, ultrasonic welding, and adhesion with an adhesive. It is still more preferable that joining be made by any one of laser welding, vibration welding, and ultrasonic welding. It is even more preferable that joining be made by laser welding. In the present embodiment, it is particularly preferable that the first member and the second member be joined by laser welding, with the first member being on the laser transmission side during laser welding. In other words, it is preferable that the second member be on the laser absorption side.

Therefore, in the structure of the present embodiment, the first member formed from the thermoplastic resin composition A and the second member formed from the thermoplastic resin composition B are joined at least partially. Here, the test piece molded to a thickness of 2 mm of the thermoplastic resin composition A has a transmittance of 70% or more determined according to Formula (C) at a frequency of 76.5 GHz. The test piece molded to a thickness of 2 mm of the thermoplastic resin composition B has a transmittance of less than 50% determined according to Formula (C) at a frequency of 76.5 GHz, and an absorptance of 40% or more determined according to Formula (A) at a frequency of 76.5 GHz.

Subsequently, a laser welding method is described as follows. In the present embodiment, the structure can be manufactured by laser welding the first member and the second member. By laser welding, the first member and the second member can be strongly welded without using an adhesive.

Although the shape of the members is not particularly limited, it is usually preferable that the shape have at least a surface contact portion (flat surface, curved surface) for use of the members joined together by laser welding. In laser welding, for example, a laser beam transmitted through a first member is absorbed by a second member, which is melted and thereby the two members are welded. The thickness of the first member through which the laser beam is transmitted (thickness in the laser transmission direction in the portion through which the laser beam is transmitted) can be appropriately determined in consideration of the application or the like. The thickness of the thickest part is, for example, 5 mm or less, preferably 4 mm or less. As a lower limit, the thickness of the thinnest part is 0.1 mm or more.

The laser light source used for laser welding may be specified according to the light absorption wavelength of the light-absorbing colorant. A laser having a wavelength range of 900 to 1100 nm is preferred, and for example, a semiconductor laser or a fiber laser can be used.

In the present embodiment, Galvano scanning laser welding is more preferred. Galvano scanning laser welding is also referred to as Galvano-type laser welding or quasi-simultaneous welding, which is a method of scanning a laser beam with a built-in Galvano mirror. The use of Galvano scanning laser welding enables laser welding in a wide range, and facilitates laser welding of uneven members and members with different thicknesses.

In the Galvano scanning laser welding, the laser irradiation speed is preferably 500 to 1500 mm/s, and the number of laps of laser irradiation is preferably 3 to 30 laps.

More specifically, a case where a first member as a member on the transmission side and a second member as a member on the absorption side are welded is described as an example. First, the portions to be welded between the two are brought into contact with each other. At this time, it is desirable that the two welding portions are in surface contact, and may be a combination of flat surfaces, a combination of curved surfaces, or a combination of a flat surface and a curved surface. Subsequently, laser light is applied from the side of the first member (laser transmission side). On this occasion, on an as needed basis, a lens may be used to converge the laser light on the interface between the two. The focused beam is transmitted through the transmission resin member, and absorbed near the surface of the absorption resin member, which is heated and melted. Subsequently, the heat is transferred to the transmission resin member by thermal conduction, which is melted. Thus, a molten pool is formed at the interface between the two, and after cooling, the two are joined.

The structure in which the first member and the second member are welded in this way has a high welding strength. It should be noted that the structure in the present embodiment is intended to include not only finished products and parts, but also members to form a part thereof.

The first member and the second member in the structure can have a laser welding strength of 800 MPa or more, which can further be 1000 MPa or more, 1300 MPa or more. The upper limit of the laser welding strength is not particularly specified, being practically 3000 MPa or less. The laser welding strength is measured according to the description in the following Examples.

### [Examples]

The present invention is described more specifically with reference to Examples as follows. Subject to the appended claims, the materials, usage amounts, ratios, processing details, processing procedures, etc. shown in the following Examples may be appropriately changed without departing from the subject matter of the present invention.

In the case where the measuring instruments and the like used in Examples are hardly available due to discontinued production, other instruments having equivalent performance may be used for the measurement.

### 1. Raw material

### <First member (thermoplastic resin composition A)>

The following raw material was used. In the following Table 1, PBT means polybutylene terephthalate resin (the same applies to the following Tables).

**[Table 1]**

| Raw material | Abbreviation | Detail |
|---|---|---|
| Thermoplastic resin composition A | A-1 | PBT, Novaduran (registered trademark) 5010G30, manufactured by Mitsubishi Engineering-Plastics Corporation |

Novaduran is a resin composition pellet containing glass fiber and a release agent.

### <Second member (thermoplastic resin composition B)>

The following raw materials were used. In the following Table 2, HIPS means high impact polystyrene, CNT means carbon nanotube, respectively (the same applies to the following Tables).

**[Table 2]**

| Raw material | Abbreviation | Detail |
|---|---|---|
| Polybutylene terephthalate resin | PBT | Novaduran (registered trademark) 5008, manufactured by Mitsubishi Engineering-Plastics, Intrinsic viscosity: 0.85 dL/g |
| Carbon nanotube master batch | CNT-MB | HIPS1001, manufactured by Nanocy, CNT content: 10 mass% |
| Stabilizer | S-1 | Hindered phenol-based stabilizer, pentaerythritol tetrakis[3-(3,5-di-tert-butyl-4-hydroxyphenyl)propionate], manufactured by ADEKA Corporation, trade name: Adekastab AO-60 |
| | S-2 | Bisphenol A-type epoxy resin "jer1003" manufactured by Mitsubishi Chemical Corporation |
| Release agent | R-1 | Polyethylene-based wax "Hi-WAX 100P" manufactured by Mitsui Chemicals, Inc., dropping point: 116°C |
| Reinforcing material | GF | Glass fiber, trade name: T-127, manufactured by Nippon Electric Glass Co., i.e., chopped strand glass fiber having an average fiber diameter of 13 µm, treated with novolac-type epoxy resin |

As shown in Table 3, the components of the materials shown in Table 2 other than glass fiber (GF) were placed in a stainless steel tumbler to be mixed and stirred for 1 hour. The content of each of the components in Table 3 is expressed in parts by mass. The resulting mixture was fed to a main hopper of a 30-mm vent-type twin screw extruder ("TEX-30α" manufactured by The Japan Steel Works, Ltd.), and the glass fiber (GF) was supplied from a side feeder located seventh from the hopper. Under conditions with a barrel temperature of the extruder C1 to C15 set to 260°C, a die temperature of 250°C, a screw rotation speed of 200 rpm, and a discharge rate of 40 kg/h, the mixture was kneaded and extruded in a strand form, so that a pellet of the thermoplastic resin composition B was obtained.

### 2. Absorptance, reflectance and transmittance at a frequency of 76.5 GHz

Using each of the pellets of the thermoplastic resin composition A and the thermoplastic resin composition B, injection molding was performed with an injection molding machine ("NEX80" manufactured by Nissei Plastic Industrial Co., Ltd.) with a cylinder temperature at 260°C and a mold temperature at 80°C, so that a test piece having a size of 100 mm × 100 mm × 2 mm thick and a test piece having a size of 100 mm × 100 mm × 3 mm thick were obtained. Using the resulting test pieces, the absorptance determined according to Formula (A), the reflectance determined according to Formula (B), and the transmittance determined according to Formula (C), at a frequency of 76.5 GHz were measured as follows.

A network analyzer "N5290A" manufactured by Keysight Technologies Inc. was used for the measurement.

In the measurement, the test piece was placed such that TD (flow direction) of the injected molding was parallel to the direction of the electric field. $Absorptance \left(%\right) = 100 - \left(\frac{1}{{10}^{- R / 10}}\times 100+\frac{1}{{10}^{- T / 10}}\times 100\right)$ wherein R represents the reflection loss measured by a free space method, and T represents the transmission loss measured by a free space method.$Reflectance \left(%\right) = \frac{1}{{10}^{- R / 10}} \times 100$ wherein R represents the reflection loss measured by a free space method.$Transmittance \left(%\right) = \frac{1}{{10}^{- T / 10}} \times 100$ wherein T represents the transmission loss measured by a free space method.

**[Table 3]**

| | Abbreviation | Unit | Composition 1 | Composition 2 | Composition 3 | A-1 |
|---|---|---|---|---|---|---|
| Composition | PBT | mass% | 67.2 | 64.2 | 59.2 | - |
| | CNT-MB | mass% | 2.0 | 5.0 | 10.0 | |
| | S-1 | mass% | 0.2 | 0.2 | 0.2 | |
| | S-2 | mass% | 0.4 | 0.4 | 0.4 | |
| | R-1 | mass% | 0.2 | 0.2 | 0.2 | |
| | GF | mass% | 30.0 | 30.0 | 30.0 | |
| | Total | mass% | 100.0 | 100.0 | 100.0 | |
| 2 mmt | Electromagnetic wave absorptance at 76.5 GHz | % | 52.1 | 60.6 | 74.8 | 6.6 |
| | Electromagnetic wave reflectance at 76.5 GHz | % | 7.3 | 27.4 | 23.0 | 3.3 |
| | Electromagnetic wave transmittance at 76.5 GHz | % | 40.6 | 12.0 | 2.2 | 90.1 |
| 3 mmt | Electromagnetic wave absorptance at 76.5 GHz | % | - | 74.5 | - | - |
| | Electromagnetic wave reflectance at 76.5 GHz | % | - | 15.4 | - | - |
| | Electromagnetic wave transmittance at 76.5 GHz | % | - | 10.1 | - | - |

### 3. Examples 1 to 10 (laser welding)

### <Molding of first member (thermoplastic resin composition A>

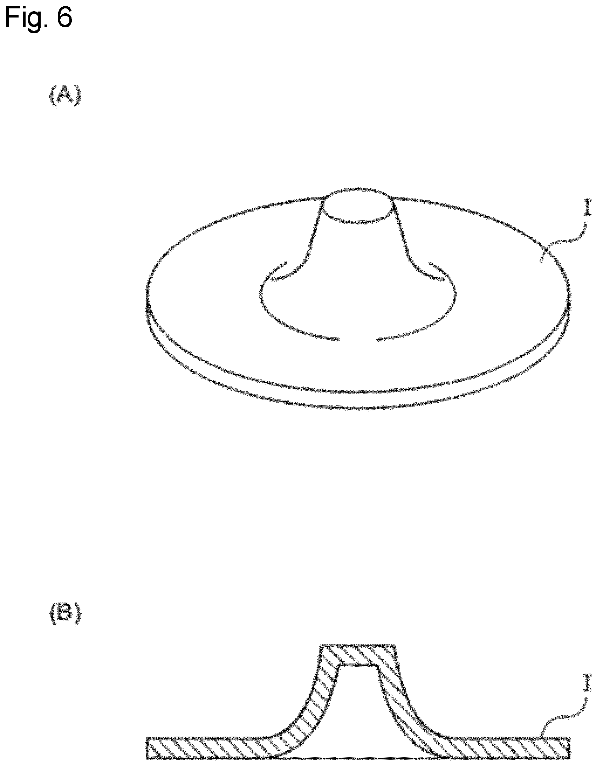

The resin pellet was dried at 120°C for 7 hours, and then molded by an injection molding machine ("J55" manufactured by The Japan Steel Works, Ltd.) with a cylinder temperature at 260°C and at a mold temperature of 60°C, so that a molding having a thickness of 1.5 mm shown in Figure 6 (transmission resin member I) was prepared.

### <Molding of second member (thermoplastic resin composition B)>

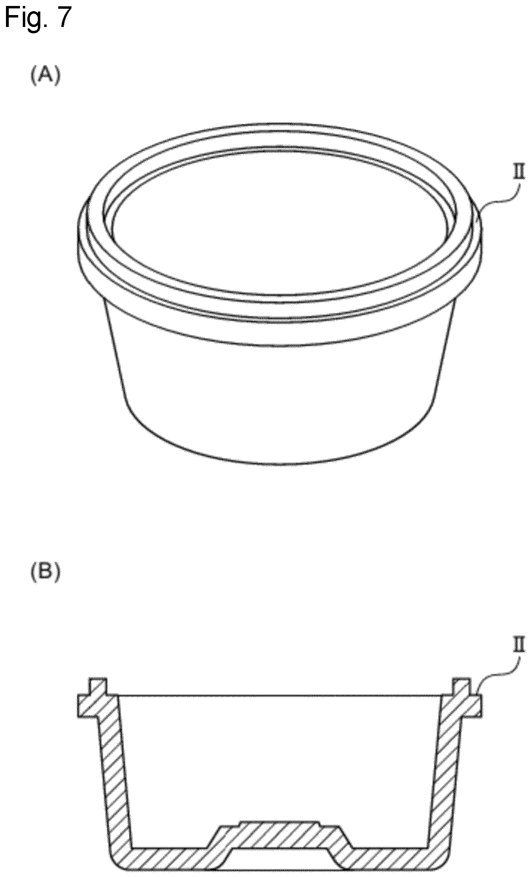

The resulting resin pellet was dried at 120°C for 7 hours, and then molded by an injection molding machine ("J55" manufactured by The Japan Steel Works, Ltd.) with a cylinder temperature at 260°C and at a mold temperature of 60°C, so that a molding shown in Figure 7 (absorption resin member II) was prepared.

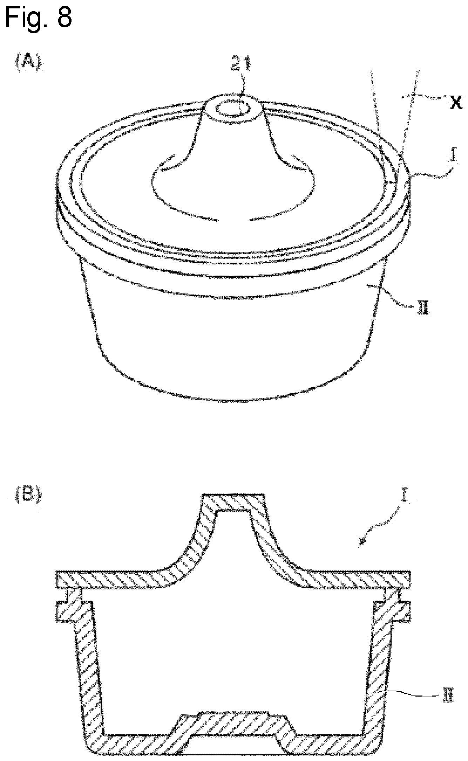

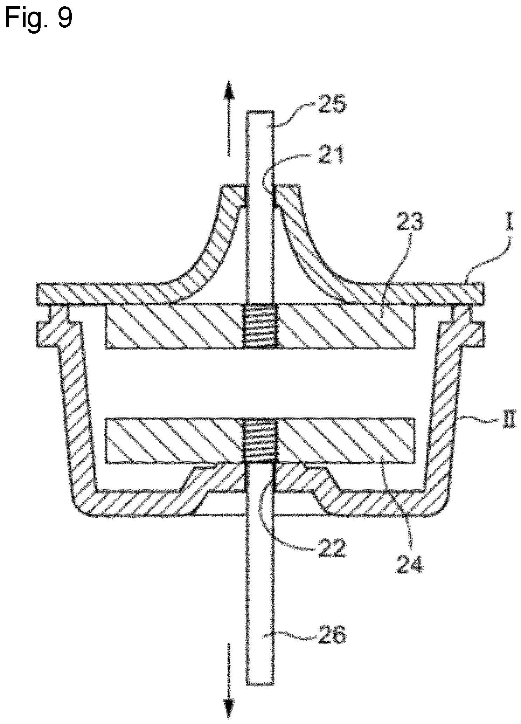

The first member and the second member shown in Tables 4 and 5 were selected. As shown in Figures 8 and 9, holes 21 and 22 were bored, respectively. The lid-shaped transmission resin member I was placed on the box-shaped absorption resin member II, with jigs 23 and 24 for measuring welding force placed inside. A laser light source was disposed in a vertically upward position of a flange part where the transmission resin member I and the absorption resin member II were overlapped. While a pressing force (pressing force during welding) of 4.92 N/mm was applied to the part where the transmission resin member I and the absorption resin member II were overlapped, to the inside direction from both sides in the thickness direction through a glass plate, laser was irradiated under the conditions described in Tables 4 and 5 to obtain a laser welded product. The portion marked with X in Figure 8 is the portion which was exposed to laser light.

The welding apparatus were as follows.

### <Galvano scanning laser welding>

Laser apparatus: YLR-300-AC-Y14 manufactured by IPG
Wavelength: 1070 nm
Collimator: 7.5 mm
Laser type: fiber
Laser Intensity (output): 180 W
Galvano scanner: Fiber Elephants 21 manufactured by ARGES
Aperture: 21 mm
Laser irradiation speed: 900 mm/sec
Number of laps of Laser irradiation: as shown in Table 4 or Table 5
Circumference of welding part: 137 mm
The position of the laser scanner was adjusted by defocusing the laser light, such that the diameter of the spot irradiated on the welding surface was 2 mm.

### <Laser welding strength>

As shown in Figure 9, jigs 25 and 26 for measurement were inserted into the upper and lower surfaces of the box formed of the transmission resin member I and the absorption resin member II, respectively, so as to be connected to jigs 23 and 24 stored inside, respectively. The jigs 25 and 26 were pulled up and down, respectively (pulling speed: 5 mm/min), and the strength (welding strength, unit: MPa) at which the transmission resin member I and the absorption resin member II are separated was measured.

The apparatus used was a 1-t Tensilon universal testing machine (load cell 10 kN) manufactured by ORIENTEC.

The results are shown in the following Tables 4 and 5.

**[Table 4]**

| | | Example 1 | Example 2 | Example 3 | Example 4 | Example 5 |
|---|---|---|---|---|---|---|
| Thermoplastic resin composition A | - | A-1 | A-1 | A-1 | A-1 | A-1 |
| Thermoplastic resin composition B | - | Composition 1 | Composition 1 | Composition 2 | Composition 2 | Composition 2 |
| Number of laps | Lap | 15 | 20 | 5 | 10 | 15 |
| Welding strength | MPa | 1690 | 1910 | 1130 | 1500 | 2060 |

**[Table 5]**

| | | Example 6 | Example 7 | Example 8 | Example 9 | Example 10 |
|---|---|---|---|---|---|---|
| Thermoplastic resin composition A | - | A-1 | A-1 | A-1 | A-1 | A-1 |
| Thermoplastic resin composition B | - | Composition 2 | Composition 3 | Composition 3 | Composition 3 | Composition 3 |
| Number of laps | Lap | 20 | 5 | 10 | 15 | 20 |
| Welding strength | MPa | 2100 | 1545 | 1920 | 2030 | 2190 |

As shown from the above results, in the present invention, the first member and the second member were suitably laser-welded.

### 4. Example 11 (two-color molding)

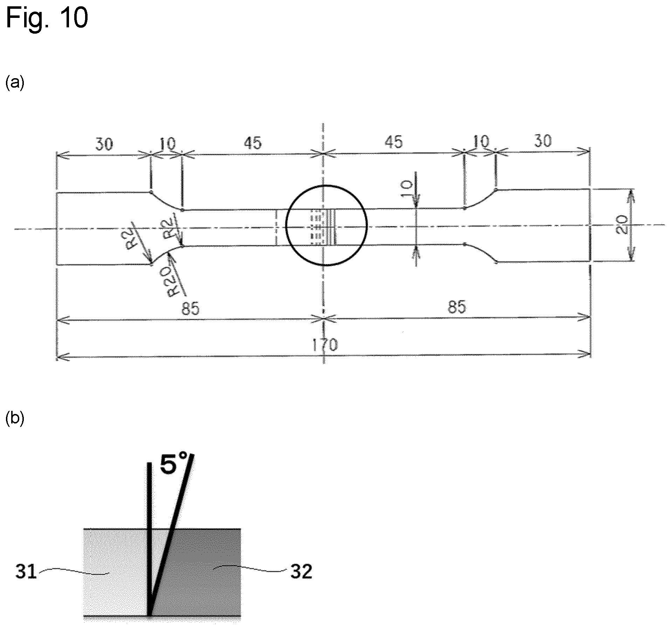

After drying the resin pellet at 120°C for 7 hours, a dumbbell-shaped test piece having a thickness of 5 mm as shown in Figure 10 was prepared by an injection molding machine ("J180" manufactured by The Japan Steel Works, Ltd.), at a first cylinder temperature of 260°C, a second cylinder temperature of 260°C, and a mold temperature of 80°C. In Figure 10 (a), a schematic diagram of the entire dumbbell test piece is shown, and in Figure 10 (b), an enlarged explanatory view of the circled portion in Figure 10 (a) as a cross-sectional view in the flow direction is shown. In Figure 10 (b), 31 indicates the thermoplastic resin composition A and 32 indicates the thermoplastic resin composition B.

Specifically, after packing the thermoplastic resin composition A from the first cylinder through the gate on the side of the dumbbell-shaped test piece to the central part, the thermoplastic resin composition B from the second cylinder was packed through the gate to the opposite side, such that an adhesive joint of resin was formed at the center of the dumbbell-shaped test piece. On this occasion, the thermoplastic resin composition A was packed to be inclined at approximately 5(C in the flow direction.

Using a universal testing machine ("Tensilon RTF2350" manufactured by A&D Co., Ltd.), the tensile breaking stress of the resulting two-color molded dumbbell-shaped test piece was measured.

The results are shown in the following Table.

**[Table 6]**

| | | Example 11 |
|---|---|---|
| Thermoplastic resin composition A | - | A-1 |
| Thermoplastic resin composition B | - | Composition 2 |
| Breaking stress | MPa | 15.2 |

### [Reference Signs List]

- 1:: First member
- 2:: Second member
- 3:: Element
- 21, 22:: Hole
- 23, 24:: Jig for measurement
- 25, 26:: Jig for measurement
- 31:: Thermoplastic resin composition A
- 32:: Thermoplastic resin composition B

## Claims

1. A structure comprising a first member (1) formed from a thermoplastic resin composition A and a second member (2) formed from a thermoplastic resin composition B,
the first member (1) and the second member (2) being joined at least partially,
wherein the thermoplastic resin composition A molded into a molding with a thickness of 2 mm has a transmittance of 70.0% or more determined according to Formula (C) at a frequency of 76.5 GHz;
the thermoplastic resin composition B molded into a molding with a thickness of 2 mm has a transmittance of less than 50.0% determined according to Formula (C) at a frequency of 76.5 GHz; and
the thermoplastic resin composition B molded into a molding with a thickness of 2 mm has an absorptance of 40.0% or more determined according to Formula (A) at a frequency of 76.5 GHz: $Transmittance \left(%\right) = \frac{1}{{10}^{- T / 10}} \times 100$
wherein T represents the transmission loss measured by a free space method; $Absorptance \left(%\right) = 100 - \left(\frac{1}{{10}^{- R / 10}}\times 100+\frac{1}{{10}^{- T / 10}}\times 100\right)$
wherein R represents the reflection loss measured by a free space method, and T represents the transmission loss measured by a free space method;
wherein transmittance and absorptance are measured in accordance with the description; and
wherein the difference between the absorptance of a test piece of the thermoplastic resin composition A molded to a thickness of 2 mm determined according to Formula (A) at a frequency of 76.5 GHz and the absorptance of a test piece of the thermoplastic resin composition B molded to a thickness of 2 mm determined according to Formula (A) at a frequency of 76.5 GHz is 40.0% or more.

2. The structure according to claim 1, wherein the thermoplastic resin composition B comprises an electrically conductive carbon compound.

3. The structure according to claim 2, wherein the electrically conductive carbon compound comprises a carbon nanotube.

4. The structure according to any one of claims 1 to 3, wherein the thermoplastic resin composition B comprises a reinforcing material.

5. The structure according to any one of claims 1 to 4, wherein the thermoplastic resin composition B comprises a polybutylene terephthalate resin.

6. The structure according to any one of claims 1 to 5, wherein the thermoplastic resin composition A comprises a polybutylene terephthalate resin.

7. The structure according to any one of claims 1 to 6, wherein the first member (1) and the second member (2) are joined by any one of laser welding, vibration welding, ultrasonic welding, two-color molding, insert molding, screwing, adhesion with an adhesive, and fitting.

8. The structure according to any one of claims 1 to 6, wherein the first member (1) and the second member (2) are joined by laser welding, with the first member being on the laser transmission side during laser welding.

9. The structure according to any one of claims 1 to 8, further comprising an electromagnetic wave controller.

10. The structure according to any one of claims 1 to 9, having a housing with a hollow structure surrounded by at least the first member (1) and the second member (2), with the housing enclosing an element (3).

11. The structure according to claim 10, wherein the element (3) emits and/or detects electromagnetic waves, and at least one of the electromagnetic waves be transmitted through the first member (1), and at least one of the electromagnetic waves be absorbed by the second member (2).

12. The structure according to claim 11, wherein the first member (1) and/or the second member (2) are present in any direction opposite to the transmitting direction and/or sensing direction of the electromagnetic waves.

13. A production method of a structure comprising joining a first member (1) formed from thermoplastic resin composition A and a second member (2) formed from thermoplastic resin composition B at least partially,
wherein the thermoplastic resin composition A molded into a molding with a thickness of 2 mm has a transmittance of 70.0% or more determined according to Formula (C) at a frequency of 76.5 GHz;
the thermoplastic resin composition B molded into a molding with a thickness of 2 mm has a transmittance of less than 50.0% determined according to Formula (C) at a frequency of 76.5 GHz; and
the thermoplastic resin composition B molded into a molding with a thickness of 2 mm has an absorptance of 40.0% or more determined according to Formula (A) at a frequency of 76.5 GHz: $Transmittance \left(%\right) = \frac{1}{{10}^{- T / 10}} \times 100$
wherein T represents the transmission loss measured by a free space method; $Absorptance \left(%\right) = 100 - \left(\frac{1}{{10}^{- R / 10}}\times 100+\frac{1}{{10}^{- T / 10}}\times 100\right)$
wherein R represents the reflection loss measured by a free space method, and T represents the transmission loss measured by a free space method;
wherein transmittance and absorptance are measured in accordance with the description; and
wherein the difference between the absorptance of a test piece of the thermoplastic resin composition A molded to a thickness of 2 mm determined according to Formula (A) at a frequency of 76.5 GHz and the absorptance of a test piece of the thermoplastic resin composition B molded to a thickness of 2 mm determined according to Formula (A) at a frequency of 76.5 GHz is 40.0% or more.

14. A millimeter wave radar module comprising the structure according to any one of claims 1 to 12.

## Patentansprüche

1. Struktur, umfassend ein erstes Element (1), das aus einer thermoplastischen Harzzusammensetzung A gebildet ist, und ein zweites Element (2), das aus einer thermoplastischen Harzzusammensetzung B gebildet ist,
wobei das erste Element (1) und das zweite Element (2) zumindest teilweise miteinander verbunden sind,
wobei die thermoplastische Harzzusammensetzung A, die zu einem Formteil mit einer Dicke von 2 mm geformt ist, eine nach Formel (C) bei einer Frequenz von 76,5 GHz bestimmte Durchlässigkeit von 70,0 % oder mehr aufweist;
die thermoplastische Harzzusammensetzung B, die zu einem Formteil mit einer Dicke von 2 mm geformt ist, eine nach Formel (C) bei einer Frequenz von 76,5 GHz bestimmte Durchlässigkeit von weniger als 50,0 % aufweist; und
die thermoplastische Harzzusammensetzung B, die zu einem Formteil mit einer Dicke von 2 mm geformt ist, eine Absorptionsfähigkeit von 40,0 % oder mehr aufweist, bestimmt gemäß Formel (A) bei einer Frequenz von 76,5 GHz: $\begin{matrix}Transmittance \left(%\right) = \frac{1}{{10}^{- T / 10}} \times 100 \\ \left(Transmittance=Durchlässigkeit\right)\end{matrix}$
wobei T den nach dem Freiraumverfahren (free space method) gemessenen Transmissionsverlust darstellt; $\begin{matrix}Absorptance \left(%\right) = 100 - \left(\frac{1}{{10}^{- R / 10}}\times 100+\frac{1}{{10}^{- T / 10}}\times 100\right) \\ \left(Absorptance=Absorptionsfähigkeit\right)\end{matrix}$
wobei R den mittels einer Freiraummethode gemessenen Reflexionsverlust (reflection loss), und T den mittels einer Freiraummethode gemessenen Transmissionsverlust darstellt;
wobei die Durchlässigkeit und die Absorptionsfähigkeit gemäß der Beschreibung gemessen werden; und
wobei die Differenz zwischen der Absorptionsfähigkeit eines auf eine Dicke von 2 mm geformten Prüfstücks der thermoplastischen Harzzusammensetzung A, bestimmt gemäß Formel (A) bei einer Frequenz von 76,5 GHz und der Absorptionsfähigkeit eines Prüfstücks der thermoplastischen Harzzusammensetzung B, das auf eine Dicke von 2 mm geformt und gemäß Formel (A) bei einer Frequenz von 76,5 GHz bestimmt wurde, 40,0 % oder mehr beträgt.

2. Struktur gemäß Anspruch 1, wobei die thermoplastische Harzzusammensetzung B eine elektrisch leitfähige Kohlenstoffverbindung umfasst.

3. Struktur gemäß Anspruch 2, wobei die elektrisch leitfähige Kohlenstoffverbindung ein Kohlenstoffnanoröhrchen umfasst.

4. Struktur gemäß mindestens einem der Ansprüche 1 bis 3, wobei die thermoplastische Harzzusammensetzung B ein Verstärkungsmaterial umfasst.

5. Struktur gemäß mindestens einem der Ansprüche 1 bis 4, wobei die thermoplastische Harzzusammensetzung B ein Polybutylenterephthalat-Harz umfasst.

6. Struktur gemäß mindestens einem der Ansprüche 1 bis 5, wobei die thermoplastische Harzzusammensetzung A ein Polybutylenterephthalat-Harz umfasst.

7. Struktur gemäß mindestens einem der Ansprüche 1 bis 6, wobei das erste Element (1) und das zweite Element (2) durch eines aus Laserschweißen, Vibrationsschweißen, Ultraschallschweißen, Zweifarben-Spritzguss, Einlegeteil-Spritzguss, Verschrauben, Verkleben mit einem Klebstoff, oder Einpassen verbunden sind.

8. Struktur gemäß mindestens einem der Ansprüche 1 bis 6, wobei das erste Element (1) und das zweite Element (2) durch Laserschweißen verbunden sind, wobei sich das erste Element während des Laserschweißens auf der Laserdurchlassseite befindet.

9. Struktur gemäß mindestens einem der Ansprüche 1 bis 8, die ferner eine elektromagnetische Wellen-Steuereinheit umfasst.

10. Struktur gemäß mindestens einem der Ansprüche 1 bis 9, die ein Gehäuse mit einer Hohlstruktur aufweist, das von mindestens dem ersten Element (1) und dem zweiten Element (2) umgeben ist, wobei das Gehäuse ein Element (3) umschließt.

11. Struktur gemäß Anspruch 10, wobei das Element (3) elektromagnetische Wellen überträgt und/oder erfasst, und wobei mindestens eine der elektromagnetischen Wellen durch das erste Element (1) übertragen wird, und mindestens eine der elektromagnetischen Wellen durch das zweite Element (2) absorbiert wird.

12. Struktur gemäß Anspruch 11, wobei das erste Element (1) und/oder das zweite Element (2) in einer beliebigen Richtung entgegengesetzt zur Übertragungs- und/oder Erfassungsrichtung der elektromagnetischen Wellen angeordnet sind.

13. Verfahren zur Herstellung einer Struktur, umfassend das zumindest teilweise Verbinden eines ersten Elements (1), das aus einer thermoplastischen Harzzusammensetzung A gebildet ist, und eines zweiten Elements (2), das aus einer thermoplastischen Harzzusammensetzung B gebildet ist,
wobei die thermoplastische Harzzusammensetzung A, die zu einem Formteil mit einer Dicke von 2 mm geformt ist, eine nach Formel (C) bei einer Frequenz von 76,5 GHz bestimmte Durchlässigkeit von 70,0 % oder mehr aufweist;
die thermoplastische Harzzusammensetzung B, die zu einem Formteil mit einer Dicke von 2 mm geformt ist, eine nach Formel (C) bei einer Frequenz von 76,5 GHz bestimmte Durchlässigkeit von weniger als 50,0 % aufweist; und
die thermoplastische Harzzusammensetzung B, die zu einem Formteil mit einer Dicke von 2 mm geformt ist, eine Absorptionsfähigkeit von 40,0 % oder mehr aufweist, bestimmt gemäß Formel (A) bei einer Frequenz von 76,5 GHz: $\begin{matrix}Transmittance \left(%\right) = \frac{1}{{10}^{- T / 10}} \times 100 \\ \left(Transmittance=Durchlässigkeit\right)\end{matrix}$
wobei T den nach dem Freiraumverfahren (free space method) gemessenen Transmissionsverlust darstellt; $\begin{matrix}Absorptance \left(%\right) = 100 - \left(\frac{1}{{10}^{- R / 10}}\times 100+\frac{1}{{10}^{- T / 10}}\times 100\right) \\ \left(Absorptance=Absorptionsfähigkeit\right)\end{matrix}$
wobei R den mittels einer Freiraummethode gemessenen Reflexionsverlust (reflection loss), und T den mittels einer Freiraummethode gemessenen Transmissionsverlust darstellt;
wobei die Durchlässigkeit und die Absorptionsfähigkeit gemäß der Beschreibung gemessen werden; und
wobei die Differenz zwischen der Absorptionsfähigkeit eines auf eine Dicke von 2 mm geformten Prüfstücks der thermoplastischen Harzzusammensetzung A, bestimmt gemäß Formel (A) bei einer Frequenz von 76,5 GHz und der Absorptionsfähigkeit eines Prüfstücks der thermoplastischen Harzzusammensetzung B, das auf eine Dicke von 2 mm geformt und gemäß Formel (A) bei einer Frequenz von 76,5 GHz bestimmt wurde, 40,0 % oder mehr beträgt.

14. Millimeterwellen-Radar-Modul, das die Struktur gemäß mindestens einem der Ansprüche 1 bis 12 umfasst.

## Revendications

1. Structure comprenant un premier élément (1) formé à partir d'une composition de résine thermoplastique A et un second élément (2) formé à partir d'une composition de résine thermoplastique B,
le premier élément (1) et le second élément (2) étant au moins partiellement assemblés,
dans laquelle la composition de résine thermoplastique A, moulée en un article moulé avec une épaisseur de 2 mm, présente une transmittance de 70,0 % ou supérieure déterminée selon la Formule (C) à une fréquence de 76,5 GHz ;
la composition de résine thermoplastique B, moulée en un article moulé avec une épaisseur de 2 mm, présente une transmittance inférieure à 50,0 % déterminée selon la Formule (C) à une fréquence de 76,5 GHz ; et la composition de résine thermoplastique B, moulée en un article moulé avec une épaisseur de 2 mm, présente un taux d'absorption de 40,0 % ou supérieur déterminé selon la Formule (A) à une fréquence de 76,5 GHz : $Transmittance \left(%\right) = \frac{1}{{10}^{- T / 10}} \times 100$
dans laquelle T représente la perte de transmission mesurée par une méthode en espace libre ; $Teux d ′ absorption \left(%\right) = 100 - \left(\frac{1}{{10}^{- R / 10}}\times 100+\frac{1}{{10}^{- T / 10}}\times 100\right)$
dans laquelle R représente la perte par réflexion mesurée par une méthode en espace libre, et T représente la perte en transmission mesurée par une méthode en espace libre ;
dans laquelle la transmittance et le taux d'absorption sont mesurés conformément à la description ; et
dans laquelle la différence entre le taux d'absorption d'un échantillon de la composition de résine thermoplastique A moulé à une épaisseur de 2 mm déterminé selon la Formule (A) à une fréquence de 76,5 GHz et le taux d'absorption d'un échantillon de la composition de résine thermoplastique B moulé à une épaisseur de 2 mm déterminé selon la Formule (A) à une fréquence de 76,5 GHz est de 40,0 % ou supérieur.

2. Structure selon la revendication 1, dans laquelle la composition de résine thermoplastique B comprend un composé carboné électriquement conducteur.

3. Structure selon la revendication 2, dans laquelle le composé carboné électriquement conducteur comprend un nanotube de carbone.

4. Structure selon l'une quelconque des revendications 1 à 3, dans laquelle la composition de résine thermoplastique B comprend un matériau de renforcement.

5. Structure selon l'une quelconque des revendications 1 à 4, dans laquelle la composition de résine thermoplastique B comprend une résine de polybutylène téréphtalate.

6. Structure selon l'une quelconque des revendications 1 à 5, dans laquelle la composition de résine thermoplastique A comprend une résine de polybutylène téréphtalate.

7. Structure selon l'une quelconque des revendications 1 à 6, dans laquelle le premier élément (1) et le second élément (2) sont assemblés par l'un quelconque parmi un soudage laser, un soudage par vibration, un soudage par ultrasons, un moulage bicolore, un moulage par insertion, un vissage, un collage avec un adhésif et un emboîtement.

8. Structure selon l'une quelconque des revendications 1 à 6, dans laquelle le premier élément (1) et le second élément (2) sont assemblés par soudage laser, le premier élément étant sur le côté transmission du laser pendant le soudage laser.

9. Structure selon l'une quelconque des revendications 1 à 8, comprenant en outre un dispositif de commande des ondes électromagnétiques.

10. Structure selon l'une quelconque des revendications 1 à 9, présentant un boîtier présentant une structure creuse entourée par au moins le premier élément (1) et le second élément (2), le boîtier enfermant un élément (3).

11. Structure selon la revendication 10, dans laquelle l'élément (3) émet et/ou détecte des ondes électromagnétiques, et au moins une des ondes électromagnétiques est transmise à travers le premier élément (1), et au moins une des ondes électromagnétiques est absorbée par le second élément (2).

12. Structure selon la revendication 11, dans laquelle le premier élément (1) et/ou le second élément (2) sont présents dans toute direction opposée à la direction d'émission et/ou à la direction de détection des ondes électromagnétiques.

13. Procédé de fabrication d'une structure comprenant l'assemblage au moins partiel d'un premier élément (1) formé à partir d'une composition de résine thermoplastique A et d'un second élément (2) formé à partir d'une composition de résine thermoplastique B,
dans laquelle la composition de résine thermoplastique A, moulée en un article moulé avec une épaisseur de 2 mm, présente une transmittance de 70,0 % ou supérieure déterminée selon la Formule (C) à une fréquence de 76,5 GHz ;
la composition de résine thermoplastique B, moulée en un article moulé avec une épaisseur de 2 mm, présente une transmittance inférieure à 50,0 % déterminée selon la Formule (C) à une fréquence de 76,5 GHz ; et
la composition de résine thermoplastique B, moulée en un article moulé avec une épaisseur de 2 mm, présente un taux d'absorption de 40,0 % ou supérieur déterminé selon la Formule (A) à une fréquence de 76,5 GHz : Formule (C) $Transmittance \left(%\right) = \frac{1}{{10}^{- T / 10}} \times 100$
dans laquelle T représente la perte de transmission mesurée par une méthode en espace libre ; $Taux d ′ absorption \left(%\right) = 100 - \left(\frac{1}{{10}^{- R / 10}}\times 100+\frac{1}{{10}^{- T / 10}}\times 100\right)$
dans laquelle R représente la perte par réflexion mesurée par une méthode en espace libre, et T représente la perte en transmission mesurée par une méthode en espace libre ;
dans laquelle la transmittance et le taux d'absorption sont mesurés conformément à la description ; et
dans laquelle la différence entre le taux d'absorption d'un échantillon de la composition de résine thermoplastique A moulé à une épaisseur de 2 mm déterminé selon la Formule (A) à une fréquence de 76,5 GHz et le taux d'absorption d'un échantillon de la composition de résine thermoplastique B moulé à une épaisseur de 2 mm déterminé selon la Formule (A) à une fréquence de 76,5 GHz est de 40,0 % ou supérieur.

14. Module radar à ondes millimétriques comprenant la structure selon l'une quelconque des revendications 1 à 12.
